# EUROPÄISCHE PATENTSCHRIFT

(11) **EP 1 756 181 B1**
(45) Veröffentlichungstag und Bekanntmachung des Hinweises auf die Patenterteilung: **01.09.2010**
(21) Anmeldenummer: 05754718.4
(22) Anmeldetag: 02.06.2005
(51) Int. Cl.: C08F 220/00, D06M 15/00

(54) **COPOLYMERISATE UND IHRE VERWENDUNG ZUR BEHANDLUNG VON FLEXIBLEN SUBSTRATEN**
COPOLYMERS AND THEIR USE FOR TREATING FLEXIBLE SUBSTRATES
COPOLYMERES ET LEUR UTILISATION POUR TRAITER DES SUBSTRATS FLEXIBLES

(30) Priorität: 04.06.2004 DE 102004027415
(43) Veröffentlichungstag der Anmeldung: 28.02.2007
(73) Patentinhaber: BASF SE, 67056 Ludwigshafen (DE)
(72) Erfinder: SCHÖPKE, Holger, 69151 Neckargemünd (DE); ADAMS, Stefan, 67065 Ludwigshafen (DE); SCHEIDL, Helfried, 67159 Friedelsheim (DE); HOFER, Bruno, 67067 Ludwigshafen (DE)
(86) Internationale Anmeldenummer: PCT/EP2005/005925
(87) Internationale Veröffentlichungsnummer: WO 2005/118661

(56) Entgegenhaltungen:
- EP-A- 0 184 153
- DE-A1- 2 806 646
- US-A- 4 128 520
- US-A- 4 918 139
- US-A- 5 087 646
- ANONYMOUS: "Ultrahold® Strong" ASF COSMETIC SOLUTIONS, [Online] 2004, XP002345939 Gefunden im Internet: URL:http://www.cosmetics.basf.de/(ofnv5uj3 xy3zfy45hgjburu3)/product_detail.aspx?PrID =Ultrahold+Strong&GrpID=243&GrpID2=> [gefunden am 2005-08-30]
- ANONYMOUS: "Luvimer® 100 P" ASF COSMETIC SOLUTIONS, [Online] 2004, XP002345945 Gefunden im Internet: URL:http://www.cosmetics.basf.de/(ofnv5uj3 xy3zfy45hgjburu3)/product_detail.aspx?PrID =Luvimer+100+P&GrpID=240&GrpID2=> [gefunden am 2005-08-30]

## Beschreibung

Die vorliegende Erfindung betrifft Copolymerisate, hergestellt durch Copolymerisation von
(a) insgesamt 3,5 bis 20 Gew.-% mindestens einer polymerisierbaren Säure, gewählt aus
   (a1) ethylenisch ungesättigten C₃-C₁₀-Monocarbonsäuren und
   (a2) ethylenisch ungesättigten C₄-C₁₀-Dicarbonsäuren oder ihren Anhydriden,
(b) 4 bis 10 Gew.-% mindestens einer Verbindung der allgemeinen Formel I, 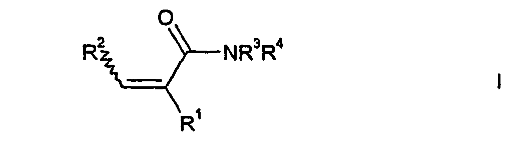 wobei die Summe aus (a) und (b) im Bereich von 7,5 bis 24 Gew.-% liegt,
(c) 60 bis 92,5 Gew.-% mindestens einer Verbindung der allgemeinen Formel II 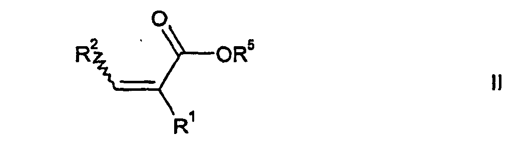
(d) 0 bis 0,5 Gew.-% mindestens einer Verbindung der allgemeinen Formel III 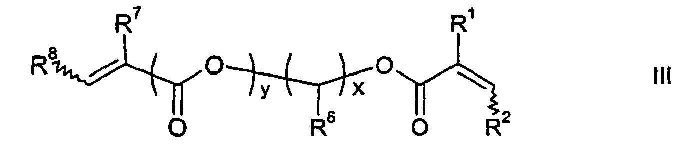
(e) 0 bis 10 Gew.-% (Meth)acrylnitril,
(f) 0 bis 10 Gew.-% mindestens eines konjugierten Diolefins,
(g) 0 bis 10 Gew.-% mindestens einer vinylaromatischen Verbindung der allgemeinen Formel IV 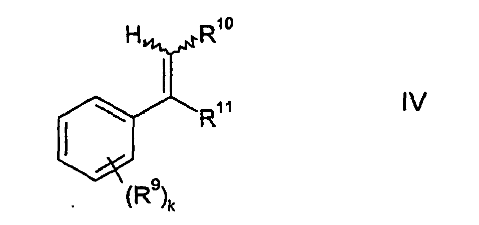 wobei die Variablen wie folgt definiert sind:
   - R¹, R²: gleich oder verschieden und gewählt aus Wasserstoff und C₁-C₁₀-Alkyl,
   - R³, R⁴: gleich oder verschieden und gewählt aus Wasserstoff, C₁-C₂₀-Alkyl, Phenyl, oder R³ und R⁴ sind gemeinsam C₂-C₁₀-Alkylen, substituiert oder unsubstituiert,
   - R⁵: gewählt aus C₁-C₂₀-Alkyl, Phenyl,
   - R⁶, R⁷, R⁸, R⁹, R¹⁰, R¹¹: gleich oder verschieden und gewählt aus Wasserstoff und C₁-C₁₀-Alkyl,
   - x: eine ganze Zahl im Bereich von 0 bis 12,
   - y: gewählt aus 0 oder 1, wobei für den Fall, dass y gleich 1 ist, x ungleich 0 gewählt wird,
   - k: eine ganze Zahl im Bereich von 0 bis 3,
wobei die Copolymerisate vollständig oder partiell mit Alkali oder Ammonium neutralisiert sein können und
wobei Angaben in Gew.-% jeweils auf das gesamte Copolymerisat bezogen sind.

Weiterhin betrifft die vorliegende Erfindung wässrige Dispersionen der erfindungsgemäßen Copolymerisate. Weiterhin betrifft die vorliegende Erfindung die Verwendung der erfindungsgemäßen wässrigen Dispersionen zur Beschichtung von flexiblen Substraten, insbesondere von Leder und Lederimitaten, und ein Verfahren zur Beschichtung von flexiblen Substraten, insbesondere von Leder und Lederimitaten, unter Verwendung von erfindungsgemäßen wässrigen Dispersionen. Weiterhin betrifft die vorliegende Erfindung beschichtete flexible Substrate und die Verwendung von erfindungsgemäß beschichteten flexiblen Substrate.

Copolymerisate von Acrylaten finden zahlreiche Anwendungen, insbesondere als Bindemittel zum Beschichten von unterschiedlichsten Substraten. Bindemittel beeinflussen die mechanischen Eigenschaften von beschichteten Substraten entscheidend. Je nachdem, wie man Bindemittel herstellt, können beschichtete flexible Substrate eine eher hart oder weich anzufühlende Oberfläche aufweisen.

Wenn man Leder oder Lederimitate beschichtet, beispielsweise beim sogenannten Finishen, prägt man in vielen Fällen, insbesondere dann, wenn man den natürlichen Narben nicht hat verwenden können, einen künstlichen Narben auf das gefinishte Leder. Dabei werden an Bindemittel für flexible Substrate wie Leder oder Lederimitate besonders anspruchsvolle Anforderungen gestellt. Der Prägevorgang wird durch die Eigenschaften des Finish entscheidend beeinflusst. Gewünscht wird, dass man möglichst schnell bei Temperaturen von über 90°C oder noch besser über 100°C prägen kann, ohne dass die Prägewerkzeuge verkleben und ohne dass der Finish Schnitte aufweist. Dabei kommt es in erheblichem Maße auf das oder die Bindemittel an. Bisher bekannte Bindemittel sind noch zu verbessern, was die Klebrigkeit bei Temperaturen von 100°C oder mehr und was das Durchschneiden beim Prägen betrifft.

Aus DE 26 17 243 A ist bekannt, dass sich ltaconsäure-Acrylat-Copolymere mit im Bereich von insgesamt 0,5 bis 3 % Säure (Itaconsäure und gegebenenfalls anderen ungesättigten Säuren) herstellen lassen. Derartige Copolymere sind geeignet, um zellenförmige Schäume herzustellen. Um eine möglichst geringe Klebrigkeit zu gewährleisten, empfiehlt DE 26 17 243, Itaconsäure und gegebenenfalls andere ungesättigte Säuren im Bereich von insgesamt 0,5 bis 3 % zu verwenden (Seite 5, zweiter Absatz).

Aus WO 88/02759 ist bekannt, dass man ungesättigte Dicarbonsäuren wie beispielsweise Itaconsäure mit Acrylaten wie beispielsweise Butylacrylat und gegebenenfalls zur Vernetzung befähigten Comonomeren wie Methylolacrylamid copolymerisieren kann. Man arbeitet vorzugsweise nach einem Mehrstufenverfahren (Seite 3, 2. Absatz), indem man von Itaconsäure verschiedene Comonomere vorlegt und die Itaconsäure erst während der Polymerisation zusetzt. Die mechanischen Eigenschaften sind jedoch bei der Beschichtung von zahlreichen flexiblen Substraten noch nicht ausreichend. Insbesondere die Klebrigkeit lässt noch zu wünschen übrig. Außerdem offenbart WO 88/02759, dass Methylolacrylamid ein besonders geeignetes Comonomer ist, das zur Vernetzung von Beschichtungen nach dem in WO 88/02759 demonstrierten Verfahren geeignet ist. Die Vernetzung beruht in jenem Falle auf der Abspaltung von Formaldehyd und der Weiterreaktion des in situ erzeugten Formaldehyds. Formaldehyd wird jedoch in zahlreichen vernetzten Substraten nicht mehr akzeptiert.

Aus US 5,143,971 ist bekannt, dass man Itaconsäure mit einem oder mehreren (Meth)acrylsäurealkylester copolymerisieren kann, indem man mindestens die Hälfte der einzupolymerisierenden Itaconsäure vorlegt und einen Zulauf, der im Wesentlichen (Meth)acrylsäurealkylester und gegebenenfalls weitere Itaconsäure enthält, während der Polymerisation zusetzt. Man erhält Copolymerisate mit einer Glastemperatur im Bereich von -20 bis -60°C, die sich zu Filmen verarbeiten lassen. Die mechanischen Eigenschaften sind jedoch bei der Beschichtung von zahlreichen flexiblen Substraten noch nicht ausreichend.

Aus EP 0 324 416 B1 sind Bindemittel bekannt, die neben anderen Comonomeren 0,5 bis 5 Gew.-% meist 3 bis 5 C-Atome enthaltende α,β-monoolefinisch ungesättigte Mono- und/oder Dicarbonsäuren und ferner deren Amide und die Verwendung der von mit Zink-Amin-Polycarbonsäure-Komplexen gehärteten Bindemittel in elastischen Beschichtungen wie Dachhäuten und rissüberbrückenden Systemen. Die offenbarten Bindemittel mit 3 Gew.-% Acrylsäure und 1 Gew.-% Acrylamid sind jedoch bei der Beschichtung von zahlreichen flexiblen Substraten und insbesondere Leder nicht ausreichend, was die Prägbarkeit betrifft.

Aus EP 0 547 430 sind wässrige Polymerisatdispersionen und deren Verwendung zum Beschichten von Leder bekannt. Die offenbarten Polymerisatdispersionen sind durch Emulsionspolymerisation bei Temperaturen im Bereich von ≥0°C und ≤50°C erhältlich und enthalten 1 bis 10 Gew.-% mindestens eines Monomers, ausgewählt aus α,β-monoethylenisch ungesättigten Mono- und Dicarbonsäuren, deren Anhydriden und deren Diamiden. Beispielhaft werden Copolymerisate offenbart, die 1 Gew.-% Acrylamid und 3 Gew.-% Acrylsäure einpolymerisiert enthalten. Beschichtet man Leder mit derartigen Dispersionen, so erhält man Leder mit guter Trockenknickfestigkeit und Heißlichtechtheit. Die Prägbarkeit insbesondere bei Temperaturen von über 90°C oder noch besser über 100°C lässt sich jedoch noch verbessern.

Es bestand die Aufgabe, Copolymerisate bereit zu stellen, die sich zur Beschichtung von flexiblen Substraten eignen und die aus dem Stand der Technik bekannten Nachteile nicht aufweisen. Es bestand insbesondere die Aufgabe, Copolymerisate bereit zu stellen, die sich zur Beschichtung von flexiblen Substraten eignen, die sich auch bei Temperaturen von über 90°C oder noch besser über 100°C gut prägen lassen, ohne klebrig zu werden. Weiterhin bestand die Aufgabe, wässrige Dispersionen von Copolymerisaten bereit zu stellen. Weiterhin bestand die Aufgabe, ein Verfahren zur Herstellung von Copolymerisaten bereit zu stellen, die sich zur Beschichtung von flexiblen Substraten eignen. Weiterhin bestand die Aufgabe, ein Verfahren zur Beschichtung von flexiblen Substraten bereit zu stellen. Schließlich bestand die Aufgabe, beschichtete flexible Substrate bereit zu stellen.

Demgemäß wurde eingangs definierte Copolymerisate gefunden. Erfindungsgemäße Copolymerisate erhält man durch Copolymerisation der folgenden Comonomere:
(a) insgesamt 3,5 bis 20 Gew.-%, bevorzugt bis 10, besonders bevorzugt 4 bis 6,5 Gew.-%, mindestens einer polymerisierbaren Säure, gewählt aus
   (a1) ethylenisch ungesättigten C₃-C₁₀-Monocarbonsäuren, insbesondere Acrylsäure, Methacrylsäure, (E)- und (Z)-Crotonsäure, und
   (a2) ethylenisch ungesättigten C₄-C₁₀-Dicarbonsäuren oder ihren Anhydriden, beispielsweise Maleinsäure, Fumarsäure, Metaconsäure, Citraconsäure, Itaconsäure, Maleinsäureanhydrid, Itaconsäureanhydrid, bevorzugt mindestens einer ethylenisch ungesättigten C₅-Dicarbonsäure, beispielsweise Metaconsäure, Citraconsäure, Itaconsäure;
   Wünscht man mindestens zwei polymerisierbare Säuren einzusetzen, beispielsweise Methacrylsäure und Itaconsäure, so beziehen sich die Angaben 3,5 bis 20 Gew.-%, bevorzugt bis 10, besonders bevorzugt 4 bis 6,5 Gew.-% polymerisierbare Säure jeweils auf die Summe an sämtlichen polymerisierbaren Säuren.
(b) 4 bis 10 Gew.-%, bevorzugt 5 bis 8 Gew.-% mindestens einer Verbindung der allgemeinen Formel I, 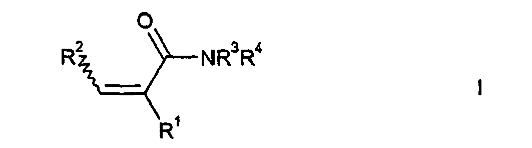 wobei die Summe aus (a) und (b) im Bereich von 7,5 bis 24 Gew.-% liegt, bevorzugt im Bereich von 9 bis 15 Gew.-%,
(c) 60 bis 92,5 Gew.-%, bevorzugt 60 bis 91 Gew.-% mindestens einer Verbindung der allgemeinen Formel II 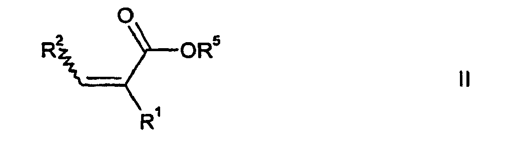
(d) 0 bis 0,5 Gew.-%, bevorzugt 0,01 bis 0,4 Gew.-% und besonders bevorzugt 0,05 bis 0,2 Gew.-% mindestens einer Verbindung der allgemeinen Formel III 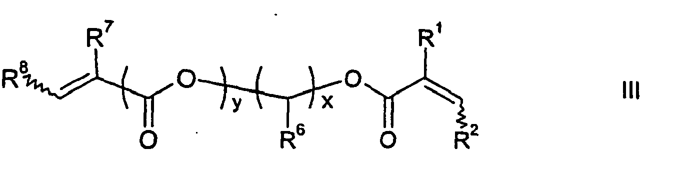
(e) 0 bis 10 Gew.-%, bevorzugt bis 7 Gew.-% (Meth)acrylnitril,
(f) 0 bis 10 Gew.-%, bevorzugt bis 8 Gew.-% mindestens eines konjugierten Diolefins, beispielsweise Isopren und insbesondere 1,3-Butadien,
(g) 0 bis 10 Gew.-%, bevorzugt 0,1 bis 8 Gew.-% mindestens einer vinylaromatischen Verbindung der allgemeinen Formel IV 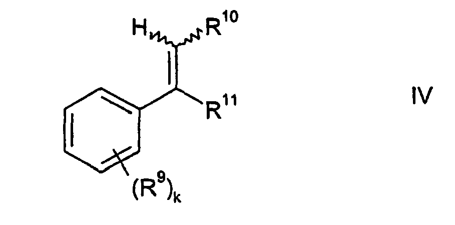 wobei die Variablen wie folgt definiert sind:
   - R¹, R²: gleich oder verschieden und unabhängig voneinander gewählt aus C₁-C₁₀- Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n- Nonyl, n-Decyl, besonders bevorzugt C₁-C₄-Alkyl wie Methyl, Ethyl, n- Propyl, iso-Propyl, n-Butyl, iso-Butyl, sec.-Butyl und tert.-Butyl;
   oder Wasserstoff,
   ganz besonders bevorzugt sind Wasserstoff und Methyl;
   - R³, R⁴: gleich oder verschieden und gewählt aus C₁-C₂₀-Alkyl, beispielsweise n- Undecyl, n-Dodecyl, n-Tridecyl, n-Tetradecyl, n-Pentadecyl, n-Hexadecyl, n-Heptadecyl, n-Octadecyl, n-Nonadecyl, n-Eicosyl; bevorzugt C₁-C₁₀-Alkyl, wie Methyl, Ethyl, n-Propyl, iso-Propyl, n-Butyl, iso-Butyl, sec.-Butyl, tert.- Butyl, n-Pentyl, iso-Pentyl, sec.-Pentyl, neo-Pentyl, 1,2-Dimethylpropyl, iso- Amyl, n-Hexyl, iso-Hexyl, sec.-Hexyl, n-Heptyl, n-Octyl, 2-Ethylhexyl, n- Nonyl, n-Decyl; besonders bevorzugt n-Butyl, Ethyl und 2-Ethylhexyl,
   Phenyl,
   oder R³ und R⁴ sind gemeinsam eine C₂-C₁₀-Alkylengruppe, die einfach oder mehrfach substituiert oder unsubstituiert sein kann, beispielsweise mit einer oder mehreren C₁-C₄-Alkylgruppen oder einer oder mehrerer C₆-C₁₄-Arylgruppen. Beispielhaft seien genannt: -CH₂-CH₂-, -(CH₂)₃-, -(CH₂)₄-, -(CH₂)₅-, -(CH₂)₆-, -(CH₂)₇-, -(CH₂)₈-, -(CH₂)₉-, -(CH₂)₁₀-, -CH₂-CH(CH₃)-, -CH₂-CH(C₂H₅)-, -CH₂-CH(*iso*-C₃H₇)-, -CH₂CH(*tert*.-C₄H₉)-,-CH₂-CH(C₆H₅)-, syn- und anti-CH(CH₃)-CH(CH₃)-, syn- und anti-CH(CH₂CH₅)-CH(C₂H₅)-, syn- und anti-CH(C₆H₅)-CH(C₆H₅)-, -CH₂-C(CH₃)₂-CH₂-, -C(CH₃)₂-C(CH₃)₂-, -C(CH₃)₂-CH₂-C(CH₃)₂-, -CH(CH₃)-CH(C₆H₅)-, -CH₂-CH(CH₃)-CH₂-, -CH₂-CH(*tert*-C₄H₉)-CH₂-;
   - R⁵: gewählt aus C₁-C₁₀-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl, besonders bevorzugt C₁-C₄-Alkyl wie Methyl, Ethyl, n-Propyl, iso-Propyl, n-Butyl, iso-Butyl, sec.-Butyl und tert.-Butyl;
   oder Phenyl,
   - R⁶, R⁷, R⁸, R⁹, R¹⁰, R¹¹: gleich oder verschieden und unabhängig voneinander gewählt aus C₁-C₁₀Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Di- methylpropyl, iso-Amyl, n-Hexyl, iso-Hexyl, sec.-Hexyl, n-Heptyl, n-Octyl, 2-Ethylhexyl, n-Nonyl, n-Decyl, besonders bevorzugt C₁-C₄-Alkyl wie Me- thyl, Ethyl, n-Propyl, iso-Propyl, n-Butyl, iso-Butyl, sec.-Butyl und tert.-Butyl, oder insbesondere Wasserstoff,
   ganz besonders bevorzugt sind R⁶ und R¹¹ gewählt aus Wasserstoff und Methyl,
   und ganz besonders bevorzugt sind R⁶, R⁷, R⁸ jeweils gleich und Wasser- stoff.
   - k: ist eine ganze Zahl im Bereich von 0 bis 3, bevorzugt 1 und besonders bevorzugt Null.
   - x: ist eine ganze Zahl im Bereich von 0 bis 12, bevorzugt 1 bis 10.
   - y: ist eine ganze Zahl und gewählt aus 0 und 1.

Dabei ist für den Fall, dass y gleich 1 ist, x ungleich 0; bevorzugt ist für den Fall, dass y gleich 1 ist, x gewählt aus 1, 2, 3, 4, 6, 8 und 10. Vorzugsweise ist für den Fall, dass y gleich 0 ist, x gewählt aus 0 und 1.

Dabei sind Angaben in Gew.-% jeweils auf gesamtes erfindungsgemäßes Copolymerisat bezogen.

Die Summe aus (a) und (b) liegt im Bereich von 7,5 bis 24 Gew.-%, bevorzugt im Bereich von 9 bis 15 Gew.-%.

Wünscht man beispielsweise mehrere Verbindungen der allgemeinen Formel II als Comonomere einzusetzen, so liegt die Summe aller Comonomere, die Verbindungen der Formel II sind, im Bereich von 60 bis 92,5 Gew.-%.

In einer bevorzugten Ausführungsform der vorliegenden Erfindung handelt es sich bei einer ethylenisch ungesättigten C₃-C₁₀-Monocarbonsäure (a1) um Methacrylsäure.

In einer bevorzugten Ausführungsform der vorliegenden Erfindung handelt es sich bei einer ethylenisch ungesättigten C₄-C₁₀-Dicarbonsäure (a2) um Itaconsäure.

Beispielhaft zu nennende Comonomere der allgemeinen Formel I sind (Meth)acrylamid, vorzugsweise Methacrylamid, weiterhin N,N-Dimethyl(meth)acrylamid, N-Methyl(meth)acrylamid, N-Phenyl(meth)acrylamid und N,N-Diethyl(meth)acrylamid sowie Verbindungen der allgemeinen Formel 1.1

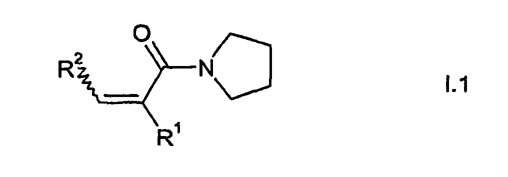

Beispielhaft zu nennende Comonomere der allgemeinen Formel II sind Methyl(meth)-acrylat, n-Butyl(meth)acrylat, iso-Butyl(meth)acrylat, sec-Butyl(meth)acrylat, t-Butyl-(meth)acrylat, Ethyl(meth)acrylat, 2-Ethylhexyl(meth)acrylat oder Mischungen derselben.

Beispielhaft zu nennende Comonomere der allgemeinen Formel III sind Allyl(meth)-acrylat und Methallyl(meth)acrylat, weiterhin Ethylenglykoldi(meth)acrylat, Propan-1,3-dioldi(meth)acrylat, Butan-1,4-dioldi(meth)acrylat, Hexan-1,6-dioldi(meth)acrylat, Oktan-1,8-dioldi(meth)acrylat, Dekan-1,10-dioldi(meth)acrylat und auch Dodekan-1,12-dioldi(meth)acrylat.

Beispielhaft zu nennende vinylaromatische Verbindungen der Formel IV sind beispielsweise α-Methylstyrol, para-Methylstyrol, α-n-Butylstyrol, para-n-Butylstyrol, 4-n-Decylstyrol und insbesondere Styrol.

In einer Ausführungsform der vorliegenden Erfindung liegt der mittlere Teilchendurchmesser (Zahlenmittel) von mindestens einem erfindungsgemäßen Copolymerisat im Bereich von 70 bis 300 nm, bevorzugt bis 200 nm.

Die Glastemperatur T_{g}, beispielsweise bestimmbar nach ASTM 3418/82, von erfindungsgemäßen Copolymerisaten liegt bei 15°C oder darunter. Bevorzugt liegt die Glastemperatur T_{g} von erfindungsgemäßen Copolymerisaten im Bereich von -60°C bis 15°C, besonders bevorzugt im Bereich von -50°C bis +10°C, ganz besonders bevorzugt im Bereich von -45°C bis -5°C.

Die erfindungsgemäßen Copolymerisate sind in aller Regel statistische Copolymerisate.

Erfindungsgemäße Copolymerisate können vollständig oder partiell mit Alkali oder Ammonium neutralisiert sein, wobei unter Alkali beispielsweise Li⁺, Rb⁺ oder Cs⁺ und insbesondere K⁺ und Na⁺ zu verstehen sind. Unter Ammonium sind nicht nur NH₄⁺, sondern auch substituierte Ammoniumionen wie beispielsweise Alkylammonium, Dialkylammonium, Trialkylammonium, Tetraalkylammonium, wobei Alkyl gleich oder verschieden sein können und gewählt aus
C₁-C₁₀-Alkyl, unsubstituiert oder ein- oder mehrfach substituiert mit beispielsweise Hydroxyl,
wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl, besonders bevorzugt C₁C₄-Alkyl wie Methyl, Ethyl, n-Propyl, iso-Propyl, n-Butyl, iso-Butyl, sec.-Butyl und tert.-Butyl,
2-Hydroxyethyl, 3-Hydroxyproyl, 4-Hydroxybutyl, 6-Hydroxyhexyl.

Ein weiterer Gegenstand der vorliegenden Erfindung ist ein Verfahren zur Herstellung erfindungsgemäßer Copolymerisate. Zur Durchführung des erfindungsgemäßen Verfahrens kann man so vorgehen, dass man
(a) insgesamt 3,5 bis 20 Gew.-% polymerisierbare Säure, gewählt aus
   (a1) mindestens einer ethylenisch ungesättigten C₃-C₁₀-Monocarbonsäure,
   (a2) mindestens einer ethylenisch ungesättigten C₄-C₁₀-Dicarbonsäure oder ihrem Anhydrid,
(b) 4 bis 10 Gew.-%, bevorzugt 2 bis 9 Gew.-% und besonders bevorzugt 3 bis 7 Gew.-% mindestens einer Verbindung der allgemeinen Formel I 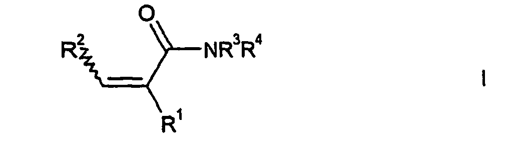 wobei die Summe aus (a) und (b) im Bereich von 7,5 bis 24 Gew.-% liegt, bevorzugt im Bereich von 9 bis 15 Gew.-%,
(c) 60 bis 92,5 Gew.-%, bevorzugt 60 bis 91 Gew.-% mindestens einer Verbindung der allgemeinen Formel II 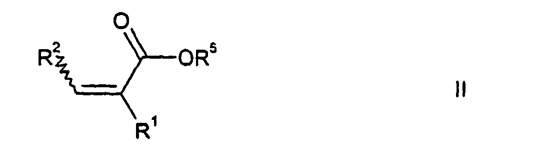
(d) 0 bis 0,5 Gew.-%, bevorzugt 0,01 bis 0,4 Gew.-% und besonders bevorzugt 0,05 bis 0,2 Gew.-% mindestens einer Verbindung der allgemeinen Formel III 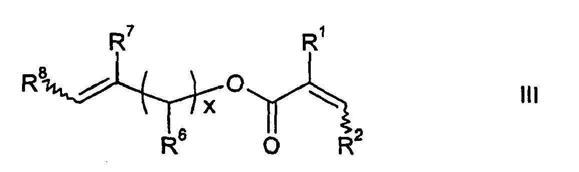
(e) 0 bis 10 Gew.-%, bevorzugt 0,1 bis 7 Gew.-% (Meth)acrylnitril,
(f) 0 bis 10 Gew.-%, bevorzugt bis 8 Gew.-% mindestens eines konjugierten Diolefins,
(g) 0 bis 10 Gew.-%, bevorzugt 0,1 bis 8 Gew.-% Gew.-% mindestens einer vinylaromatischen Verbindung der allgemeinen Formel IV 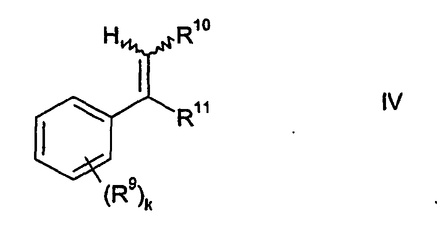 wobei die Variablen in den allgemeinen Formeln I bis IV wie vorstehend definiert sind,
   durch Emulsionspolymerisation miteinander polymerisiert
   und gegebenenfalls mit basischer Alkalimetallverbindung, Ammoniak oder Amin vollständig oder partiell neutralisiert.

Dabei wird im Folgenden auch dann von Emulsionspolymerisation gesprochen, wenn drei oder mehr Comonomere eingesetzt werden. Der Begriff Emulsionspolymerisation umfasst im Folgenden also auch Emulsionscopolymerisationen.

Man kann verschiedene Fahrweisen der Emulsionspolymerisation zur Herstellung von erfindungsgemäßem Copolymerisat wählen, beispielsweise einen Batch-Prozess (diskontinuierlich) oder semi- oder vollkontinuierliche Verfahren wie Zulaufverfahren.

Dabei kommen auch sogenannte Saatfahrweisen in Frage, wie sie beispielsweise in EP 0 810 831 beschrieben sind. Durch Saatfahrweise lassen sich besonders gut erfindungsgemäße Copolymerisate mit besonders gut reproduzierbarer Teilchendurchmesserverteilung erzeugen.

Üblicherweise polymerisiert man unter Verwendung mindestens eines Initiators. Mindestens ein Initiator kann ein Peroxid sein. Beispiele für geeignete Peroxide sind Alkalimetallperoxodisulfate wie z. B. Natriumperoxodisulfat, Ammoniumperoxodisulfat, Wasserstoffperoxid, organische Peroxide wie Diacetylperoxid, Di-tert.-butylperoxid, Diamylperoxid, Dioctanoylperoxid, Didecanoylperoxid, Dilauroylperoxid, Dibenzoylperoxid, Bis-(o-toluyl)peroxid, Succinylperoxid, tert.-Butylperacetat, tert.-Butylpermaleinat, tert.-Butylperisobutyrat, tert.-Butylperpivalat, tert.-Butylperoctoat, tert.-Butylperneodecanoat, tert.-Butylperbenzoat, Di-tert.-butylperoxid, tert.-Butylhydroperoxid, Cumolhydroperoxid, tert.-Butylperoxi-2-ethylhexanoat und Diisopropylperoxidicarbamat. Geeignet sind auch Azoverbindungen wie beispielsweise Azobisisobutyronitril, Azobis(2-amidopropan)dihydrochlorid und 2,2'-Azobis(2-methylbutyronitril).

Redoxinitiatoren sind ebenfalls geeignet, beispielsweise aus Peroxiden und oxidierbarer Schwefelverbindung. Ganz besonders bevorzugt sind Systeme aus Acetonbisulfit und organischem Peroxid wie tert.-C₄H₉-OOH, Na₂S₂O₅ (Natriumdisulfit) und organischem Peroxid wie tert.-C₄H₉-OOH oder HO-CH₂SO₂Na und organischem Peroxid wie tert.-C₄H₉-OOH. Auch sind Systeme wie beispielsweise Ascorbinsäure/H₂O₂ besonders bevorzugt.

Als Polymerisationstemperatur bzw. Temperatur, bei der man die Copolymerisation durchführt, kann man Temperaturen im Bereich von 20 bis 105°C, bevorzugt 55 bis 100°C wählen. Die gewählte Temperatur ist abhängig von der Zerfallscharakteristik des verwendeten Initiators bzw. der verwendeten Initiatoren.

Als Temperatur, bei der man die anschließende Neutralisation durchführt, kann man Temperaturen im Bereich von 10 bis 105°C, bevorzugt 20 bis 50°C wählen.

Die Druckbedingungen sind im Allgemeinen unkritisch, geeignet sind beispielsweise Drücke im Bereich von Normaldruck bis 10 bar.

Man kann mindestens einen Emulgator einsetzen, der anionisch, kationisch oder nichtionisch sein kann.

Gebräuchliche nichtionische Emulgatoren sind z.B. ethoxylierte Mono-, Di- und Tri-Alkylphenole (Ethoxylierungsgrad: 3 bis 50, Alkylrest: C₄-C₁₂) sowie ethoxylierte Fettalkohole (Ethoxylierungsgrad: 3 bis 80; Alkylrest: C₈-C₃₆). Beispiele sind die Lutensol^{®}-Marken der BASF Aktiengesellschaft und die Triton^{®}-Marken der Union Carbide.

Übliche anionische Emulgatoren sind z.B. Alkalimetall- und Ammoniumsalze von Alkylsulfaten (Alkylrest: C₈ bis C₁₂), von Schwefelsäurehalbestern ethoxylierter Alkanole (Ethoxylierungsgrad: 4 bis 30, Alkylrest: C₁₂-C₁₈) und ethoxylierter Alkylphenole (Ethoxylierungsgrad: 3 bis 50, Alkylrest: C₄-C₁₂), von Alkylsulfonsäuren (Alkylrest: C₁₂-C₁₈) und von Alkylarylsulfonsäuren (Alkylrest: C₉-C₁₈).

Geeignete kationische Emulgatoren sind in der Regel einen C₆-C₁₈-Alkyl-, -Aralkyl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Hydrochlorid, die Chloride oder Acetate der verschiedenen 2-(*N,N,N*-Trimethylammonium)ethylparaffinsäureester, *N*-Cetylpyridiniumchlorid, *N*-Laurylpyridiniumsulfat sowie *N*-Cetyt-*N,N,N*-trimethylammoniumbromid, *N*-Dodecyl-*N,N,N*-trimethylammoniumbromid, *N,N*-Distearyl-*N,N*-dimethylammoniumchlorid sowie das Gemini-Tensid *N,N*-(Lauryldimethyl)ethylendiamindibromid. Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989**.**

Natürlich kann man der Reaktionsmischung weitere Zusatzstoffe beifügen, die in der Emulsionspolymerisation üblich sind, beispielsweise Glykole, Polyethylenglykole, Schutzkolloide und Puffer/pH-Wert-Regulatoren.

Als Zeitdauer für die Emulsionspolymerisation kann man beispielsweise eine Zeitdauer im Bereich von 30 Minuten bis 12 Stunden wählen, bevorzugt sind 2 bis 5 Stunden.

Im Anschluss an die eigentliche Copolymerisation kann man desodorieren, beispielsweise durch Zugabe von Initiator, der gleich oder verschieden von dem in der eigentlichen Copolymerisation eingesetzten Initiator ist.

In einer Ausführungsform der vorliegenden Erfindung verläuft die Copolymerisation im Wesentlichen vollständig. Die Zusammensetzung erfindungsgemäßer Copolymeren unterscheidet sich nicht messbar von der Zusammensetzung der Comonomeren.

In einer Ausführungsform der vorliegenden Erfindung übt man das erfindungsgemäße Verfahren nach Art eines Einstufenverfahrens aus. Dabei sollen unter Einstufenverfahren im Sinne der vorliegenden Erfindung beispielsweise diskontinuierliche (Batch)-Verfahren verstanden werden und Zulaufverfahren, bei denen ein Anteil der Comonomere vorgelegt werden kann und Anteile der Comonomeren während der Copolymerisation zugefügt werden (Zulauf), wobei die Zusammensetzung des Zulaufs betreffend die Comonomeren während der Copolymerisation im Wesentlichen konstant bleibt.

In einer anderen Ausführungsform der vorliegenden Erfindung übt man das erfindungsgemäße Verfahren nach Art einer Stufenfahrweise aus. Darunter soll im Sinne der vorliegenden Erfindung Zulaufverfahren, kontinuierlich oder diskontinuierlich, verstanden werden, bei denen man die Zusammensetzung des Zulaufs während der Emulsionspolymerisation ändert.

Durch das erfindungsgemäße Verfahren hergestellte erfindungsgemäße Copolymerisate fallen üblicherweise in Form wässriger Dispersionen an, die ebenfalls Gegenstand der vorliegenden Erfindung sind und aus denen sich die erfindungsgemäßen Copolymerisate durch an sich bekannte Methoden wie beispielsweise Verdampfen des Wassers isolieren lassen.

Erfindungsgemäße Dispersionen enthalten mindestens ein erfindungsgemäßes Copolymerisat.

In einer Ausführungsform der vorliegenden Erfindung ist der mittlere Durchmesser (Zahlenmittel) von Feststoffpartikeln in erfindungsgemäßen wässrigen Dispersionen im Bereich von 70 bis 300 nm, bevorzugt bis 200 nm, bestimmt beispielsweise durch quasielastische Lichtstreuung (QELS). Geeignete Messmethoden sind beispielsweise in ISO13321 beschrieben und gehen von stark mit Wasser verdünnten erfindungsgemäßen wässrigen Dispersionen mit einem Feststoffgehalt von 0,005 Gew.-% und weniger aus.

In einer Ausführungsform der vorliegenden Erfindung weisen erfindungsgemäße Dispersionen einen Feststoffgehalt im Bereich von 5 bis 60 Gew.-% auf, bevorzugt 20 bis 50 Gew.-%, besonders bevorzugt 25 bis 40 Gew.-%.

In einer speziellen Ausführungsform der vorliegenden Erfindung weisen erfindungsgemäße Dispersionen einen pH-Wert im Bereich von 2 bis 9 auf.

In einer speziellen Ausführungsform der vorliegenden Erfindung weisen erfindungsgemäße Dispersionen einen pH-Wert im Bereich von 2 bis 6, bevorzugt im Bereich von 3 bis 4 auf. Es handelt sich dabei vorzugsweise um erfindungsgemäße Dispersionen, die nicht neutralisiertes erfindungsgemäßes Copolymerisat enthalten.

In einer anderen speziellen Ausführungsform der vorliegenden Erfindung weisen erfindungsgemäße Dispersionen einen pH-Wert im Bereich von 6 bis 9, bevorzugt im Bereich von 6,5 bis 8 auf. Es handelt sich dabei vorzugsweise um erfindungsgemäße Dispersionen, die partiell oder vollständig neutralisiertes erfindungsgemäßes Copolymerisat enthalten.

In einer Ausführungsform der vorliegenden Erfindung enthalten erfindungsgemäße Dispersionen kein weiteres Vernetzungsmittel.

In einer Ausführungsform der vorliegenden Erfindung kann man erfindungsgemäßen Dispersionen ein latentes Vernetzungsmittel zusetzen, beispielsweise im Bereich von 0,01 bis 1,5 Gew.-%, bevorzugt bis 1,25 Gew.-%, bezogen auf Feststoffe von erfindungsgemäßer Dispersion.

Geeignete latente Vernetzungsmittel sind beispielsweise gewählt aus Magnesium-, Calcium- und Zinkverbindungen.

Bevorzugte Calciumverbindungen sind beispielsweise Ca(OH)₂ CaO·aq und CaO. Bevorzugte Magnesiumverbindungen sind Mg(OH)₂, basische Magnesiumcarbonate wie beispielsweise MgCO₃ · Mg(OH)₂ · H₂O und insbesondere MgCl₂·6 H₂O.

Bevorzugte Zinkverbindungen sind beispielsweise Zinkoxid, ZnO·aq und Zinktetraminkomplexsalze. Besonders bevorzugt sind [Zn(NH₃)₄]CO₃, [Zn(NH₃)₄](HCO₃)₂ und (Zn(NH₃)₄]SO₄.

In einer Ausführungsform der vorliegenden Erfindung setzt man erfindungsgemäßen Dispersionen mindestens ein latentes Vernetzungsmittel nach Beendigung der Copolymerisation zu.

In einer anderen Ausführungsform der vorliegenden Erfindung setzt man erfindungsgemäßen Dispersionen kein latentes Vernetzungsmittel zu. Diese Ausführungsform ist dann möglich, wenn man (d) > 0 Gew.-% wählt, d.h. man copolymerisiert mit mindestens einer Verbindung der allgemeinen Formel III.

In einer weiteren Ausführungsform der vorliegenden Erfindung setzt man erfindungsgemäßen Dispersionen vorzugsweise vor der Verwendung mindestens einen sogenannten Reaktivvernetzer zu, beispielsweise im Bereich von 0,01 bis 10 Gew.-%, bevorzugt bis 1,5 Gew.-%, bezogen auf Feststoffe von erfindungsgemäßer Dispersion, der beispielsweise gewählt wird aus Isocyanaten, Aziridinen und Epoxiden. Besonders bevorzugt ist Trimethylolpropantris-Betaaziridino-Propionat und Isocyanat aus EP-A 0 697 424, Beispiel 2.

In einer weiteren Ausführungsform der vorliegenden Erfindung wählt man (d) > 0, d.h. man copolymerisiert mit mindestens einer Verbindung der allgemeinen Formel III, und setzt erfindungsgemäßer Dispersion mindestens einen Reaktivvernetzer oder mindestens ein latentes Vernetzungsmittel zu.

Ein weiterer Gegenstand der vorliegenden Erfindung ist die Verwendung von erfindungsgemäßen wässrigen Dispersionen zur Beschichtung von flexiblen Substraten. Ein weiterer Gegenstand der vorliegenden Erfindung ist ein Verfahren zur Beschichtung von flexiblen Substraten unter Verwendung von erfindungsgemäßen wässrigen Dispersionen, im Folgenden auch erfindungsgemäßes Beschichtungsverfahren genannt, und ein weiterer Gegenstand der vorliegenden Erfindung sind beschichtete flexible Substrate, erhältlich durch ein erfindungsgemäßes Beschichtungsverfahren.

Flexible Substrate im Sinne der vorliegenden Erfindung sind beispielsweise Textil und insbesondere Leder und Lederimitate.

Unter Leder ist im Rahmen der vorliegenden Erfindung vorgegerbtes, gegerbtes und gegebenenfalls nachgegerbtes Leder oder entsprechend bearbeitetes synthetisches Austauschmaterial zu verstehen, was während mindestens eines Gerbschritts bereits mit mindestens einem Farbstoff behandelt worden sein kann. Leder im Rahmen der vorliegenden Erfindung kann bereits hydrophobiert bzw. gefettet sein.

Bei Lederimitaten handelt es sich beispielsweise um Fasergebilde wie beispielsweise wovens und non-wovens, die mit Hilfe von Bindemitteln gebunden sind. Beispielhaft seien Fasergebilde aus gegerbten Lederfasern, z. B. von Schleifabfällen und/oder Falzspänen genannt, wie sie bei der Lederherstellung anfallen.

Zur Durchführung des erfindungsgemäßen Beschichtungsverfahrens geht man vorteilhaft so vor, dass man flexible Substrate mit mindestens einer erfindungsgemäßen Formulierung kontaktiert und danach thermisch behandelt. Beispielsweise kann man Leder mit mindestens einer wässrigen Flotte behandeln, die mindestens eine erfindungsgemäße Formulierung enthält, und so behandeltes Leder in einem oder mehreren Durchlauftrockenkanälen bei Lufttemperaturen von 60 bis 150 °C, bevorzugt 80 bis110°C, trocknen. Danach stapelt man die noch warmen, zugerichteten Leder aufeinander, üblicherweise Narben- auf Narben- und Fleisch- auf Fleischseite. Wenn man mindestens eine erfindungsgemäße Formulierung einsetzt hat, so beobachtet man, dass es trotz der hohen Gewichte der auflagernden Leder kaum zu Verklebungen der Zurichtseiten der unteren Lederstücke kommt.

In einer anderen Ausführungsform der vorliegenden Erfindung handelt es sich bei dem erfindungsgemäßen Beschichtungsverfahren um ein Verfahren zur Zurichtung von Leder. Ziel einer Zurichtung von Leder, auch Beschichtung von Leder genannt, ist es, Leder das gewünschte Aussehen, spezielle haptische Eigenschaften sowie Gebrauchsechtheiten zu geben wie z.B. Knickelastizität, Aminbeständigkeit, Nass- und Trockenreibechtheit und Wasserbeständigkeit.

In einer Ausführungsform geht das erfindungsgemäße Verfahren zur Beschichtung von flexiblen Substraten aus von vorgegerbtem, gegerbtem und gegebenenfalls nachgegerbtem Leder, welches bereits nach an sich bekannter Weise hydrophobiert und gefärbt sein kann.

Zunächst bringt man mindestens eine Grundierdispersion oder - wenn ein zweischichtiger Grundierungsaufbau gewünscht wird, erst eine sogenannte Haftgrundierung, danach die Grundierdispersion, die jeweils eine oder mehrere erfindungsgemäße wässrige Dispersionen enthalten können - in einer Menge auf das zu beschichtende Leder gebracht, dass pro m² Lederoberfläche etwa 5 bis 100 g Feststoff aufgebracht werden, bevorzugt 10 bis 50 g/m². Das Aufbringen kann durch an sich bekannte Methoden erfolgen, beispielsweise Rollcoaten (Walzenauftrag), Streichen, Spritzen, sogenanntes "airless Spritzen", Drucken, Kaschieren, Plüschen, Bürsten, Gießen oder Aufsprühen. Man kann das so behandelte Leder anschließend trocknen, beispielsweise bei einer Temperatur im Bereich von 30 bis 150°C, bevorzugt 80 bis 120°C. Das Aufbringen von mindestens einer Grundierdispersion kann in einem oder in mehreren Schritten erfolgen, die gleich oder verschieden durchgeführt werden können und jeweils durch eine Zwischentrocknung bei den oben genannten Temperaturen unterbrochen sein können.

Erfindungsgemäß eingesetzte Grundierdispersionen, die im Folgenden auch als erfindungsgemäße Grundierdispersionen bezeichnet werden, sind üblicherweise wässrig. Sie können weitere, nicht-wässrige Lösemittel enthalten wie beispielsweise Ethylenglykol, N-Methylpyrrolidon, 1-Methoxypropanol-2, 2-Methoxypropanol-1, Butylglykol (2-Butoxyethanol), Butyldiglykol (2-(2-Butoxyethoxy)ethanol) und Propylencarbonat. In einer bevorzugten Ausführungsform enthalten erfindungsgemäße Grundierdispersionen folgende Bestandteile:
α1) mindestens eine erfindungsgemäße wässrige Dispersion. Für Automobilleder kann eine Abmischung mit einem Urethanbinder von weiterem Vorteil sein,
β1) mindestens ein Wachs, wie beispielsweise oxidiertes Polyethylenwachs, Carnaübawachs oder Montanwachs, beispielsweise bevorzugt 1 bis 15 Gew.-%,
γ1) optional mindestens ein Biozid, beispielsweise 1,2-Benzisothiazolin-3-on ("BIT") (kommerziell erhältlich als Proxel®-Marken der Fa. Avecia Lim.) und dessen Alkalimetallsalze; andere geeignete Biozide sind
   2-Methyl-2H-isothiazol-3-on ("MIT') und
   5-Chlor-2-methyl-2H-isothiazol-3-on ("CIT"). Im Allgemeinen sind 10 bis 150 ppm Biozid ausreichend. Insbesondere dann, wenn man als latentes Vernetzungsmittel mindestens eine Zinkverbindung einsetzt, kann man auf den Einsatz von Bioziden verzichten.

Grundierdispersionen können weiterhin mindestens ein Füll- und Antiklebemittel enthalten. Geeignet sind beispielsweise wässrige Formulierungen, enthaltend Fettsäureester, Eiweiß oder Proteine und anorganischem Füllstoff, der gewählt werden kann aus amorpher Kieselsäure, Silikaten und Tonmineralen.

Vor dem Aufbringen kann man erfindungsgemäße Grundierdispersion mit mindestens einer Pigmentpräparation vermischen, wobei Pigmente aus anorganischen und organischen Pigmenten gewählt sein können, beispielsweise Azopigmente, Anthrachinonpigmente, Azophosphinpigmente, Thioindigopigmente, Dioxazinpigmente, Naphthalintetracarbonsäurepigmente, Perylentetracarbonsäurepigmente, kupferhaltige oder kupferfreie Phthalocyaninpigmente, verlackte Farbstoffe wie beispielsweise Calcium-, Magnesium- oder Aluminiumlacke von Sulfonsäuregruppen- oder Carbonsäuregruppen-haltigen Farbstoffen, weiterhin Eisenoxide, Nickel-Chromverbindungen, Siliziumdioxide, Aluminiumoxide, Ultramarin, Spinelle und Titandioxide.

Pigmentpräparationen im Sinne der vorliegenden Erfindung können neben Pigment ein oder mehrere Dispergiermittel, Tenside, Biozide und Netzmittel enthalten und weiterhin Wasser. Pigmentpräparationen im Sinne der vorliegenden Erfindung können einen Feststoffgehalt im Bereich von 5 bis 60 Gew.-% aufweisen.

Wenn man erfindungsgemäße Grundierdispersion mit Pigmentpräparation vermischt, so kann man die Mengenverhältnisse in weiten Bereichen wählen. Beispielsweise kann man die Mengenverhältnisse so wählen, dass die sich Feststoffgehalte von erfindungsgemäßer Grundierdispersion und Pigmentpräparation wie 1 : 1 bis 30 : 1 verhalten.

Erfindungsgemäße Grundierdispersionen können einen Feststoffgehalt von 10 bis 60 Gew.-% haben, bevorzugt sind 20 bis 50 Gew.-%.

Anschließend kann man eine Deckschicht nach an sich bekannten Methoden aufbringen. Die Deckschicht kann aus den üblichen Bestandteilen bestehen.

In einer Ausführungsform der vorliegenden Erfindung enthält die Deckschicht, jeweils bezogen auf die Gesamtmasse an Deckschicht:
α2) mindestens eine erfindungsgemäße wässrige Dispersion. Für Automobilleder kann eine Abmischung mit einem Polyurethanbinder von weiterem Vorteil sein,
ε2) optional mindestens ein Verdickungsmittel.

In einer bevorzugten Ausführungsform der vorliegenden Erfindung enthält die Deckschicht mindestens ein Bindemittel, dessen Härte höher ist als die Härte der Grundierschicht.

Vor dem Aufbringen kann man erfindungsgemäße Deckschicht mit mindestens einer Pigmentpräparation vermischen, wobei Pigmente und Pigmentpräparationen wie vorstehend definiert sind.

Wenn man erfindungsgemäße Deckschicht mit Pigmentpräparation vermischt, so kann man die Mengenverhältnisse in weiten Bereichen wählen. Beispielsweise kann man die Mengenverhältnisse so wählen, dass die sich Feststoffgehalte von erfindungsgemäßer Deckschicht und Pigmentpräparation wie 1 : 1 bis 30 : 1 verhalten.

Anschließend kann man eine Appretur, auch Appreturdispersion genannt, aufbringen, wobei man als Appretur etwa 2 bis 30 g/m² Lederoberfläche aufbringt, wobei man die Menge/m² an Appretur an den Verwendungszweck des Leders anpasst und wobei die Angaben in g/m² jeweils auf den Feststoffanteil der Appretur bezogen sind. So sind für Möbelleder 2 bis 15 g/m² bevorzugt und für Leder für Automobilteile 5 bis 30 g/m². Die Appretur oder Topcoat dient zum Schutz des Leders und soll neben hoher Flexibilität auch eine gute Kratzfestigkeit, Öl- und Wasserbeständigkeit gewährleisten. Je nach gewünschtem Artikel soll sie Glanz oder Mattigkeit aufweisen, d.h. man kann auch Mattierungsmittel zugeben. Appreturen können beispielsweise enthalten: Formulierungen aus mindestens einem Bindemittel auf Acrylat- oder Polyurethanbasis, ein Vernetzungsmittel, Eiweiß, Nitrocelluloseemulsion, Füllstoffe auf Basis von wahlweise organischen oder anorganischen Mattierungsmitteln, Silikonwachs, Fettsäureestern und/oder Fettsäuren.

Erfindungsgemäße Appreturdispersionen können neben erfindungsgemäßer wässriger Dispersion weitere Bindemittel enthalten. Für Automobilleder kann eine Abmischung mit einem Polyurethanbindemittel von weiterem Vorteil sein, beispielsweise eine Polyurethandispersion, hergestellt nach DE-A 42 31 034 oder DE-A 40 03 442.

Vor dem Aufbringen kann man erfindungsgemäße Appreturdispersion mit mindestens einer Pigmentpräparation vermischen, wobei Pigmente und Pigmentpräparationen wie vorstehend definiert sind.

Wenn man erfindungsgemäße Appreturdispersion mit Pigmentpräparation vermischt, so kann man die Mengenverhältnisse in weiten Bereichen wählen. Beispielsweise kann man die Mengenverhältnisse so wählen, dass die sich Feststoffgehalte von erfindungsgemäßer Appreturdispersion und Pigmentpräparation wie 5 : 1 bis 100 : 1 verhalten.

Deckschichten und Appreturdispersionen können ein oder mehrere Verdickungsmittel enthalten. Beispielhaft seien vernetzbare Copolymere auf Basis von Acrylsäure und Acrylamid sowie Verdickungsmittel auf Basis von Polyurethan oder Polyvinylpyrrolidon oder Acrylat(co)polymerisaten genannt. Weiterhin sind sogenannte Assoziatiwerdicker geeignet, beispielweise auf Basis Hydrophob/Hydrophil-gebauter Polyurethane, Polyharnstoffe und Polyetherpolyole.

Bei dem erfindungsgemäßen Verfahren zur Zurichtung von Leder verwendet man in mindestens einem Schritt - Grundierung, Aufbringen der Deckschicht und Appretur - mindestens eine erfindungsgemäße wässrige Dispersion.

Vorteilhaft kann man eine Appretur in Form einer Dispersion, im Rahmen der vorliegenden Erfindung auch Appreturdispersion genannt, aufbringen, wobei man etwa 10 bis 30 g/m² Lederoberfläche Appreturdispersion aufbringt.

In einer Ausführungsform der vorliegenden Erfindung enthält erfindungsgemäße Appreturdispersion
α3) mindestens eine erfindungsgemäße Dispersion
β3) optional mindestens ein Wachs, wie beispielsweise oxidiertes Polyethylenwachs oder Montanwachs, geeignete Mengen sind beispielsweise 20 bis 70 Gew.-%,
γ3) optional mindestens ein Biozid, beispielsweise 1,2-Benzisothiazolin-3-on ("BIT") (kommerziell erhältlich als Proxel®-Marken der Fa. Avecia Lim.) und dessen Alkalimetallsalze; andere geeignete Biozide sind 2-Methyl-2H-isothiazol-3-on ("MIT") und 5-Chlor-2-methyl-2H-isothiazol-3-on ("CIT"). Im Allgemeinen sind 10 bis 150 ppm Biozid ausreichend,
δ3) mindestens ein Mattierungsmittel.

Natürlich können Appreturdispersionen weitere übliche Bestandteile enthalten, beispielsweise Schellack oder ein oder mehrere weitere Pigmente oder Nitrocellulose.

Als Verdicker kann man natürliche oder synthetische Verdicker einsetzen. Bevorzugt ist der Einsatz von synthetischen Verdickern, beispielsweise gewählt aus der Verbindungsklasse der acrylsäurereichen Copolym-Dispersionen und der hydrophob modifizierten Polyacrylsäurecopolymeren und bevorzugt der nichtionischen hydrophob/hydrophil modifizierten Polyether, Urethane und Harnstoffe, offenbart beispielsweise in J. Bieleman, Additives for Coatings, Wiley-VCH, Weinheim 2000, außerdem Proceedings 7th Nürnberg Congress of Coatings Technology 2003 part II, insbesondere F. Sauer, II.2, S. 161, M. Schmidtchen, II.4, S. 173, I. Mussard, II.4, S. 173, K. Dvizok, 11.5, S. 161 und in den vorstehend genannten zitierte Stellen.

Nach Aufbringen der Appretur kann man unter üblichen Bedingungen trocknen, beispielsweise bei Temperaturen im Bereich von 60 bis 80°C, und anschließend nachbügeln, beispielsweise bei Temperaturen im Bereich von 90 bis 160°C. Man kann auch hydraulisch nachbügeln, beispielsweise bei Temperaturen im Bereich von 70 bis 100°C. Es kommen konventionelle Vorrichtungen zum Bügeln in Frage wie beispielsweise Durchlaufbügelmaschinen.

Im Rahmen der vorliegenden Erfindung wird mindestens eine Schicht, ausgewählt aus Grundierschicht, Deckschicht und Appretur, unter Verwendung von mindestens einer erfindungsgemäßen wässrigen Dispersion hergestellt. Vorzugsweise stellt man jedoch mindestens zwei, besonders bevorzugt mindestens drei Schichten unter Verwendung von mindestens einer erfindungsgemäßen wässrigen Dispersion her.

Gegenstand der vorliegenden Erfindung ist weiterhin ein Lederfinish, enthaltend:
im Bereich von 30 bis 80 Gew.-%, bevorzugt 50 bis 75 Gew.-% mindestens eines erfindungsgemäßen Copolymerisats,
   im Bereich von 15 bis 40 Gew.%, bevorzugt 20 bis 35 Gew.-% mindestens eines Fillers,
im Bereich von 0,1 bis 3 Gew.-% mindestens eines Verdickers,
   im Bereich von 0,1 bis 10 Gew.-%, bevorzugt 0,2 bis 5 Gew.-% Vernetzungsmittel,
im Bereich von 0 bis 1 Gew.-%, bevorzugt 0,1 bis 0,3 Gew.-% mindestens eines Biozids,
wobei die Angaben in Gew.-% jeweils die Feststoffe betreffen und auf den Feststoffgehalt des erfindungsgemäßen Lederfinish bezogen sind.

Als Vernetzungsmittel und als Biozid kann man beispielsweise die vorstehend genannten latenten Vernetzungsmittel bzw. Reaktivvernetzer bzw. Biozide einsetzen. Wenn man (d) > 0 Gew.-% wählt, kann man auf den Zusatz von Reaktivvernetzer bzw. latentem Vernetzungsmittel verzichten.

Als Filler kann man Gemische einsetzen, die enthalten:
im Bereich von 20 bis 30 Gew.-% eine oder mehrerer anorganischen feste Verbindungen, z.B. amorphe Kieselsäure, Kaolin, Bentonit, beispielsweise mit einem mittleren Partikeldurchmesser im Bereich von 20 nm bis 20 µm, bevorzugt im Bereich von 2 µm bis 15 µm,
   im Bereich von 25 bis 50 Gew.-% eines oder mehrerer organischen Öle und/oder Fette, z.B. Triolein, Lanolin, Klauenöl, Erdnussöl, Paraffin;
   im Bereich von 0 bis 40 Gew.-% Protein, z.B. Casein, bevorzugt setzt man Protein-freie Filler ein;
   im Bereich von 5 bis 15 Gew.-% ein oder mehrere oberflächenaktive Verbindungen, beispielsweise ein oder mehrere Tenside, z.B.
   organische Säuren, z.B. Ölsäure, Stearinsäure, bevorzugt als Ammoniumsalz, C₁₀-C₄₀-Alkanole, gegebenenfalls ein- bis 30-fach ethoxyliert,
   kation-aktive Tenside, wie z.B. quaternisierte Ester von Stearinsäure mit Triethanolamin,
   und/oder polymere Dispergierhilfsmittel wie z.B. Copolymere von Acrylamidosulfonsäure-Natriumsalz mit beispielsweise (Meth)acrylamid,
   und
   im Bereich von 0 bis 7 Gew.-%, bevorzugt 0,1 bis 5 Gew.-% sonstige Hilfsmittel wie z.B. Biozide, die wie oben gewählt werden, anorganische und organische Basen,
und Wasser,
   wobei Gew.-% jeweils auf die Trockenmasse des betreffenden Fillers bezogen ist.
Filler können einen pH-Wert beispielsweise im Bereich von 6 bis 10 aufweisen.

Erfindungsgemäßes Lederfinish kann einen Feststoffgehalt im Bereich von 10 bis 40 Gew.-%, bevorzugt 15 bis 30 Gew.-% aufweisen.

In einer Ausführungsform der vorliegenden Erfindung weist erfindungsgemäßes Lederfinish eine kinematische Viskosität im Bereich von 20 bis 40 s, bevorzugt im Bereich von 25 bis 35 s auf, bestimmt beispielsweise nach DIN 53211.

Erfindungsgemäßes Lederfinish lässt sich beispielsweise als Grundierdispersion verwenden und in mit Wasser verdünnter Form ganz besonders bevorzugt als Appreturdispersion.

Ein weiterer Gegenstand der vorliegenden Erfindung sind flexible Substrate, insbesondere Leder und Lederimitate, erhältlich unter Verwendung von erfindungsgemäßen Copolymerisaten. Ein weiterer Gegenstand der vorliegenden Erfindung sind flexible Substrate, insbesondere Leder und Lederimitate, erhältlich nach dem erfindungsgemäßen Beschichtungsverfahren.

Erfindungsgemäße flexible Substrate weisen vorzügliche anwendungstechnische Eigenschaften auf, beispielsweise sind sie weich, schichten und belasten einander nicht und sind klebfrei stapelbar. Erfindungsgemäße Leder und Lederimitate lassen sich darüber hinaus besonders gut prägen, beispielsweise mit statischen hydraulischen Pressen und sogenannten "scharfen" Prägeplatten, z.B. vom Typ Madras, beispielsweise bei Temperaturen im Bereich von 80 bis 120°C und insbesondere bei Temperaturen im Bereich von 90°C bis 110°C, wobei sich die Temperatur jeweils auf die Prägeplatte bezieht, und Haltezeiten im Bereich von 1 bis 5, bevorzugt bis 4 s. In Durchlaufprägemaschinen kann man erfindungsgemäße Lederimitate und erfindungsgemäße Leder bei Temperaturen im Bereich von 100 bis 140°C, bevorzugt 110 bis 125°C und Drucke 200-250 bar prägen.

Erfindungsgemäße beschichtete flexible Substrate und insbesondere erfindungsgemäßes Leder sind außerdem im Rahmen der üblichen Tests Formaldehyd-frei, d.h. bei üblichen Tests liegt der Formaldehyd-Gehalt unter 10 ppm.

Ein weiterer Gegenstand der vorliegenden Erfindung ist ein Verfahren zur Herstellung von Schuhen, Bekleidung, Möbeln oder Automobilteilen unter Verwendung von erfindungsgemäßen beschichteten flexiblen Substraten, insbesondere unter Verwendung von erfindungsgemäßem Leder oder erfindungsgemäßen Lederimitaten. Ein weiterer Gegenstand der vorliegenden Erfindung sind Möbel, beispielsweise Sessel und Sofas, und Automobilteile, beispielsweise Sitze, Lenkräder, Türen, Mittelkonsolen und Armaturenbretter, hergestellt jeweils unter Verwendung von erfindungsgemäßen flexiblen Substraten und insbesondere unter Verwendung von erfindungsgemäßem Leder bzw. erfindungsgemäßen Lederimitaten.

Die Erfindung wird durch Arbeitsbeispiele erläutert.

Allgemeine Bemerkungen: Unter vollentsalztem Wasser wird Wasser verstanden, das durch gängige Ionentauscher von Salzen befreit wurde.

Die Glastemperaturen T_{g} wurden mit einem DSC-Gerät der Firma Mettler nach folgender Methode in Anlehnung an DIN 53765 bestimmt:
Einwaage: 10 bis 20 mg Copolymerisat-Dispersion in 40µl-Standard-Aluminiumtiegel

Bei der Standardmethode für Dispersionen wird in der zweiten Aufheizkurve die Glastemperatur T_{g} (Midpoint) mit Hilfe eines Auswertemakros automatisch ermittelt. Hierbei wird eine zuvor mit einem leeren Tiegel gemessene Blindkurve subtrahiert.

Der Temperaturverlauf entspricht der gültigen DIN-Norm DIN 53765.

Der Beginn des Messablaufes ist bei 25°C. Man heizt mit 20°C/min auf 150°C (also über T_{g} hinaus) auf - die Temperatur 150°C wird 3 Minuten isotherm gehalten und dann wird mit 20°C/min auf -110°C abgekühlt. Nach einem weiteren 7-minütigen, isothermen Halten der Temperatur bei -110°C wird mit 20°C/min auf 150°C aufgeheizt (dieser Abschnitt wird ausgewertet ) und die Temperatur bei 150°C 5 Minuten gehalten.

### 1. Herstellung von erfindungsgemäßen Formulierungen

### I.1. Herstellung von erfindungsgemäßem Copolymerisat P1

Es wurden die folgenden Mischungen angesetzt, wobei Angaben in Gew.-% jeweils auf die Summe aller Comonomeren bezogen sind:

### Mischung 1.1

| | | | |
|---|---|---|---|
| 1,4 g | Natriumpyrophosphat, | | |
| 35 g | Itaconsäure, | 2,5 | Gew.-% |
| 84 g | Methacrylamid, gelöst in 476 g Wasser, | 6 | Gew.-% |
| 56 g | Methacrylsäure | 4 | Gew.-% |
| 805 g | n-Butylacrylat, | 57,46 | Gew.-% |
| 420 g | Ethylacrylat | 30 | Gew.-% |
| 1,05 g | Allylmethacrylat | 0,1 | Gew.-% (aufgerundet) |
| 17,5 g | Natriumlaurylsulfat, gelöst in 45 g Wasser, | | |
| zusammen dispergiert in weiteren 150 ml vollentsalztem Wasser. | | | |

### Mischung 1.2:

4,2 g Na₂S₂O₈ (Natriumperoxodisulfat),
gelöst in 250 g vollentsalztem Wasser

### Mischung 1.3:

6 g 70 Gew.-% wässrige Lösung von tert.-Butylhydroperoxid, verdünnt mit weiteren
45 g vollentsalztem Wasser.

### Mischung 1.4

3,8 g HO-CH₂-SO₂Na in 50 g vollentsalztem Wasser

### Mischung 1.5

250 g wässrige Lösung von [Zn(NH₃)₄](HCO₃)₂, verdünnt mit 290 g vollentsalztem Wasser

Die wässrige Lösung von [Zn(NH₃)₄](HCO₃)₂ war wie folgt hergestellt worden:
Man legt 920 g vollentsalztes Wasser vor und gab unter Rühren 157 g Ammoniumhydrogencarbonat zu. Man rührte 30 Minuten bei Zimmertemperatur. Anschließend gab man 100 g Zinkoxid zu und danach 223 g 25 Gew.-% wässrige Ammoniaklösung. Man rührte weitere 60 Minuten bei Zimmertemperatur und filtrierte über ein 100 µm-Netz.

In einem 5-I-Kessel mit Rührer, Stickstoff-Anschluss und zwei Dosiervorrichtungen wurden 1050 g vollentsalztes Wasser und 27,8 g Polystyrolsaat mit einem mittleren Teilchendurchmesser von 25 nm vorgelegt. Unter Rühren wurde 15 Minuten lang Stickstoff durch die Vorlage geblasen und anschließend auf 80°C erwärmt. Während der nun folgenden Copolymerisation hielt man die Temperatur bei 80°C.

Man begann gleichzeitig mit der Dosierung von Mischung 1.1 und Mischung 1.2, wobei man die Dosierung von Mischung 1.1 innerhalb von 120 Minuten und die Dosierung von Mischung 1.2 innerhalb von 135 durchführte. Nach beendeter Dosierung von Mischung 1.2 rührte man 30 Minuten lang nach. Danach wurden gleichzeitig Mischung 1.3 und Mischung 1.4 über einen Zeitraum von 90 Minuten zugegeben. Danach kühlte man auf 20 Minuten ab und gab bei 20°C Mischung 1.5 innerhalb von 30 Minuten tropfenweise zu. Man rührte weitere 10 Minuten nach und filtrierte über ein 125-µm-Netz ab.

Man erhielt erfindungsgemäße wässrige Dispersion D1.1, enthaltend 35,4 Gew.-% erfindungsgemäßes Copolymerisat CP1.1. Der pH-Wert betrug 7,8, die Lichtdurchlässigkeit betrug 86, die Viskosität betrug 45 mPa·s (bestimmt nach DIN EN ISO 3219) und die Glastemperatur T_{g} betrug -18°C.

I.2 bis I.19. Herstellung weiterer erfindungsgemäßer Copolymerisate und weiterer erfindungsgemäßer Dispersionen
Man ging vor wie unter I.1 beschrieben, wählte jedoch die Mischungen wie in Tabelle 1 beschrieben.

In den Beispielen D1.4 bis D1.8 und D1.19 wurde Ca als Ca(OH)₂ eingebracht.

**Tabelle 1: Herstellung und Zusammensetzung erfindungsgemäßer Copolymerisate und erfindungsgemäßer wässriger Dispersionen und des Vergleichspolymerisats V1.28**

| Copolymerisat | ItS | MAH | MAM | AM | n-BA | EA | EHA | AIMA | AN | AS | MAS | CS | S | T_{g} [°C] | Disper sion | Zn | Ca |
|---|---|---|---|---|---|---|---|---|---|---|---|---|---|---|---|---|---|
| CP1.1 | 2,5 | - | 6 | - | 57,5 | 30 | - | 0,075 | - | - | 4 | - | - | -18 | D1.1 | 1 | - |
| CP1.2 | 2,5 | - | 6 | - | - | 30 | 57,5 | 0,075 | - | - | 4 | - | - | -34 | D1.2 | 1 | - |
| CP1.3 | 2,5 | - | 6 | - | - | 30 | 57,5 | 0,075 | - | - | 4 | - | - | -35 | D1.3 | 1,25 | - |
| CP1.4 | 3 | - | 4 | - | 60 | 23 | - | 0,1 | 7 | - | 3 | - | - | -17 | D1.4 | - | 0,7 |
| | | | | | | | | | | | | | | | | | |
| CP1.6 | 2,5 | - | 6 | - | 57,5 | 30 | - | 0,075 | - | - | 4 | - | - | -18 | D1.6 | - | 0,6 |
| CP1.7 | 2,5 | - | 6 | - | - | 30 | 57,5 | 0,075 | - | - | 4 | - | - | -34 | D1.7 | - | 0,6 |
| CP1.8 | 2,5 | - | 6 | - | - | 30 | 57,5 | 0,075 | - | - | 4 | - | - | -35 | D1.8 | - | 1 |
| CP1.9 | 2,5 | - | - | 5 | 58,5 | 30 | - | 0,075 | - | - | 4 | - | - | n.b. | D1.9 | 1 | - |
| CP1.10 | - | - | 6 | - | 58 | 30 | - | 0,075 | - | 3,5 | - | - | - | n.b. | D1.10 | 1 | - |
| CP1.11 | - | 2,2 | 6 | - | 57,8 | 30 | - | 0,075 | - | - | 4 | - | - | n.b. | D1.11 | 1 | - |
| CP1.12 | - | - | 6 | - | 58,3 | 30 | - | 0,075 | - | - | 4 | 1,7 | - | n.b. | D1.12 | 1 | - |
| CP1.13 | 8,5 | - | 6 | - | 55,5 | 30 | - | 0,075 | - | - | - | - | - | n.b. | D1.13 | 1 | - |
| CP1.14 | - | - | 6 | - | 60 | 29 | - | 0,075 | - | - | 5 | - | - | n.b. | D1.14 | 1 | - |
| CP1.15 | 2,5 | - | 6 | - | 59 | 30 | - | 0,075 | - | - | 2,5 | - | - | n.b. | D1.15 | 1 | - |
| CP1.16 | - | - | 6 | - | 60 | 30 | - | 0,075 | - | - | 4 | - | - | n.b. | D1.16 | 1 | - |
| CP1.17 | - | - | 6 | - | 60 | 29 | - | 0,075 | - | - | 5 | - | - | n.b. | D1.17 | 0,5 | - |
| CP1.18 | - | - | 6 | - | 60 | 30 | - | 0,075 | - | - | 4 | - | - | n.b. | D1.18 | 0.8 | - |
| CP1.19 | - | - | 6 | - | 60 | 30 | - | 0,075 | - | - | 4 | - | - | n.b. | D1.19 | - | 0,6 |
| CP1.20 | 1 | - | 6 | - | 59 | 30 | - | 0,075 | - | - | 4 | - | - | n.b. | D1.20 | 1 | - |
| CP1.21 | 2,5 | - | 6 | - | 57,5 | 30 | - | 0 | - | - | 4 | - | - | n.b. | D1.21 | 1 | - |
| CP1.22 | | - | 6 | - | 60 | 30 | - | 0,075 | - | - | 4 | - | - | n.b. | D1.22 | 0,5 | - |
| CP1.23 | 2 | - | 6 | - | 58 | 30 | - | 0,075 | - | - | 4 | - | - | n.b. | D1.23 | 1 | - |
| CP1.24 | | - | 6 | - | 60 | 29 | - | 0,075 | - | - | 5 | - | - | n.b. | D1.24 | 1 | - |
| CP1.25 | 2,5 | - | 6 | - | 57,5 | 30 | - | 0,075 | - | - | 4 | - | - | n.b. | D1.25 | 0,8 | - |
| CP1.26 | - | - | 5 | - | 59 | 30 | - | 0,075 | - | - | 4 | - | - | n.b. | D1.26 | 1,5 | - |
| CP1.27 | - | - | 5 | - | 59 | 30 | - | 0,05 | - | - | 4 | - | 2 MMA | n.b. | D1.27 | 1,5 | - |
| V1.28 | - | - | 2 | 2 AMol | 62 | | | | | | 2 | | 32 MMA | - 5 | V-D1.28 | 1 | |

Alle Angaben von Comonomeren und Zn bzw. Ca sind in Gew.-% ausgedrückt und beziehen sich auf gesamtes erfindungsgemäßes Copolymerisat. Alle Angaben von Comonomeren sind gerundet. Die Polystyrolsaat ist jeweils nicht mit einbezogen.

Verwendete Abkürzungen: ist: Itaconsäure, MAM: Methacrylamid, AM: Acrylamid, n-BA: n-Butylacrylat, EA: Ethylacrylat, EHA: 2-Ethylhexylacrylat, AIMA: Allylmethacrylat, AN: Acrylnitril, AS: Acrylsäure, MAS: Methacrylsäure, S: Styrol, CS: (E)-Crotonsäure, MAH: Maleinsäureanhydrid, AMOL: Acrylsäuremetylolamid, MMA: Methacrylsäuremethylester

### II. Herstellung eines erfindungsgemäßen Lederfinishs

Durch Verrühren der unten aufgeführten Komponenten wurden erfindungsgemäße Lederfinishs hergestellt.

Komponenten:
- 200 g: weiße Pigmentpräparation gemäß DE 41 42 240 A1, Beispiel 3
- 100 g: Filler (wässrige pastöse Mischung von Fettsäureestern, pH-Wert 9, ca. 25 Gew.-% Feststoffgehalt)
- 60 g: Mattierungsmittel: wässrige Dispersion von amorpher Kieselsäure, pH-Wert 9, 20 Gew.-% Feststoffgehalt, dispergiert mit C₁₈H₃₇-O(CH₂CH₂O)₂₅-H
- 40 g: Ölgrund, wässrige Emulsion einer Mischung natürlicher Fette, pH-Wert 3, Feststoffgehalt55%, mit kationischem Fettsäurekondensat, dispergiert mit cis-n-CH₃(CH₂)₇-CH=CH-(CH₂)₇-COO-CH₂CH₂-N(CH₂CH₂OH)₃⁺ Cl⁻.
- 100 g: Wasser
- 500 g: einer erfindungsgemäßen Dispersion gemäß Tabelle 1
- 2 g: eines Härters, bestehend aus 90 Gew.-% Trimethylolpropantris- Betaaziridino-Propionat (s. Formel VI), 8 Gew.-% Diacetonalkohol und 2 Gew.-% 1,4-Diazabicyclo[2.2.2]octan, hergestellt durch Vermischen von Diazabicyclo[2.2.2]octan mit Ethylenimin und anschließende Zugabe von Trimethylolpropantriacrylat.

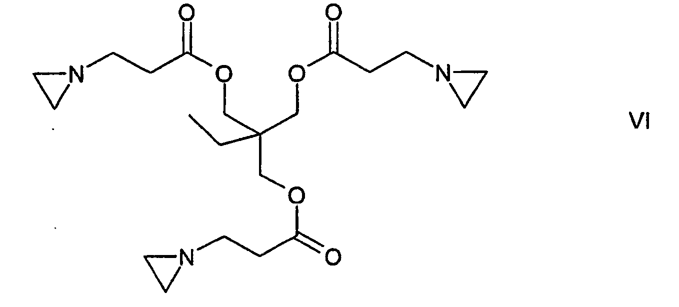

Man erhielt die erfindungsgemäßen Lederfinishs 2.1 bis 2.27 bzw. das Vergleichsfinish V2.28.

### III. Applikation der erfindungsgemäßen Lederfinishs

Die zur Prüfung verwendeten Leder waren narbenseitig geschliffene (z.B. 220er Schleifpapier) weiche (Möbel-)Polsterleder.

Je ein erfindungsgemäßes Lederfinish wurde auf eine Lederprobe mit einem Rollcoater im Gegenlaufverfahren aufgebracht, die Auftragsmenge Finish betrug 10 ± 1 g/ft² (g/Quadratfuß).

Die Auftragsmengen wurden bestimmt durch Nachwiegen von noch feuchten Lederstücken der Größe DIN A4.

Alle Aufträge wurden dreimal im Trockenkanal bei 100°C (1 min Durchlass) getrocknet. Anschließend wurde geprägt.

### IV. Prägen eines erfindungsgemäßen Leders

Das Prägen erfolgte in die Grundierung mit einer hydraulischen Presse mit auf 105°C vorgeheizter Platte unter Einhalten des maximalen Drucks (220 bar) für zwei Sekunden. Es wurde mit sogenannten scharfen Prägeplatten vom Typ "Madras" gearbeitet, die bei Leder aus dem Stand der Technik zum Durchschneiden des bereits aufgebrachten Zurichtfilms neigten.

Man erhielt die erfindungsgemäßen geprägten Leder 4.1 bis 4.15 und das geprägte Vergleichsleder V4.16.

### Man bewertete

Klebrigkeit: d.h. wie stark das Leder an der Platte nach Hochfahren der Presse kleben bleibt. "Kein Kleben" heißt, das Leder bleibt auf der Gegenplatte liegen.

Prägebild: kein "Durchschneiden", d.h. kein Durchpressen des Films bis zur Lederoberfläche, so dass der Film reißt und sogar Fasern sichtbar werden konnten. Ein guter Prägestand heißt, dass das Bild der Platte ideal wiedergegeben wurde, so dass der Eindruck eines natürlichen Narbenbildes entstand, der auch nach Millen erhalten blieb.

Weichheit: nach Millen des Leders war bei erfindungsgemäßem Leder haptisch keine Verhärtung mehr feststellbar, der Griff war rund und elegant, wie es für hochwertige Lederartikel erwartet wird.

Die Flexibilität: wurde am fertig (d.h. inkl. Topcoat) zugerichteten Leder im Knicktest nach EN ISO 5402 (DIN 53 351, IUP 20) mit dem Bally-Flexometer bestimmt (mindestens 50.000 Flexe trocken bzw. mindestens 20.000 Flexe nass) ohne Beschädigung.

Die Ergebnisse sind in Tabelle 2 wiedergegeben.

**Tabelle 2: Anwendungstechnische Untersuchungen an erfindungsgemäßen Ledem**

| Dispersion | Lederfinish | Geprägtes Leder | Klebfreiheit | Durchschneiden | Griff | Knicktest | |
|---|---|---|---|---|---|---|---|
| | | | | | | trocken | nass |
| D1.1 | 2.1 | 4.1 | ++ | ++ | weich, elegant | + | ++ |
| D1.2 | 2.2 | 4.2 | ++ | ++ | Ausgezeichnet | ++ | ++ |
| D1.3 | 2.3 | 4.3 | ++ | ++ | weich, elegant | + | ++ |
| D1.4 | 2.4 | 4.4 | ++ | + | weich, elegant | + | ++ |
| | | | | | | | |
| D1.6 | 2.6 | 4.6 | ++ | + | weich, elegant | + | ++ |
| D1.7 | 2.7 | 4.7 | ++ | + | ausgezeichnet | ++ | ++ |
| D1.8 | 2.8 | 4.8 | ++ | + | weich, elegant | + | ++ |
| D1.9 | 2.9 | 4.9 | + | ++ | weich, elegant | ++ | + |
| D1.10 | 2.10 | 4.10 | + | + | weich, elegant | ++ | + |
| D1.11 | 2.11 | 4.11 | + | + | weich, elegant | 0 | ++ |
| D1.12 | 2.12 | 4.12 | 0 | ++ | weich, elegant | 0 | + |
| D1.13 | 2.13 | 4.13 | + | + | weich, elegant | 0 | + |
| D1.14 | 2.14 | 4.14 | + | ++ | ausgezeichnet | + | + |
| D1.15 | 2.15 | 4.15 | + | + | weich, elegant | + | + |
| D1.16 | 2.16 | 4.16 | + | + | weich, elegant | ++ | ++ |
| D1.17 | 2.17 | 4.17 | + | + | weich, elegant | + | + |
| D1.18 | 2.18 | 4.18 | + | + | weich, elegant | + | + |
| D1.19 | 2.19 | 4.19 | + | 0 | weich, elegant | + | ++ |
| D1.20 | 2.20 | 4.20 | ++ | + | weich, elegant | + | ++ |
| D1.21 | 2.21 | 4.21 | + | ++ | weich, elegant | + | ++ |
| D1.22 | 2.22 | 4.22 | + | + | weich, elegant | ++ | + |
| D1.23 | 2.23 | 4.23 | ++ | + | weich, elegant | + | ++ |
| D1.24 | 2.24 | 4.24 | + | ++ | weich, sehr elegant | + | + |
| D1.25 | 2.25 | 4.25 | + | + | weich, elegant | ++ | ++ |
| D1.26 | 2.26 | 4.26 | ++ | ++ | Ausgezeichnet | ++ | + |
| D1.26 | 2.26 | 4.26 | ++ | ++ | Ausgezeichnet | ++ | + |
| D1.27 | 2.27 | 4.27 | ++ | ++ | Ausgezeichnet | ++ | + |
| V-D1.28 | V 28 | V 4.28 | 0 | - | merklich hart | 0 | 0 |

## Patentansprüche

1. Copolymerisate, hergestellt durch Copolymerisation von
(a) insgesamt 3,5 bis 20 Gew.-% mindestens einer polymerisierbaren Säure, gewählt aus
(a1) ethylenisch ungesättigten C₃-C₁₀-Monocarbonsäure und
(a2) ethylenisch ungesättigten C₄-C₁₀-Dicarbonsäure oder ihren Anhydriden,
(b) 4 bis 10 Gew.-% mindestens einer Verbindung der allgemeinen Formel I, 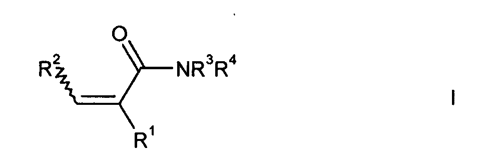 wobei die Summe aus (a) und (b) im Bereich von 7,5 bis 24 Gew.-% liegt,
(c) 60 bis 92,5 Gew.-% mindestens einer Verbindung der allgemeinen Formel II 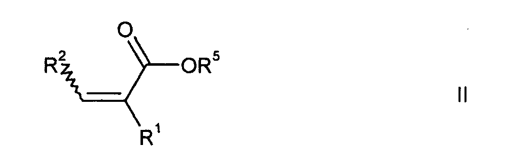
(d) 0 bis 0,5 Gew.-% mindestens einer Verbindung der allgemeinen Formel III 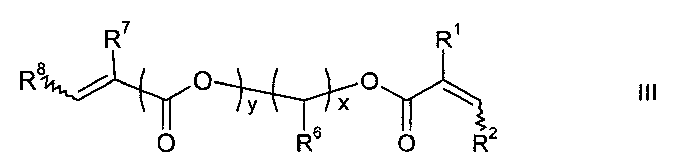
(e) 0 bis 10 Gew.-% (Meth)acrylnitril,
(f) 0 bis 10 Gew.-% mindestens eines konjugierten Diolefins,
(g) 0 bis 10 Gew.-% mindestens einer vinylaromatischen Verbindung der allgemeinen Formel IV 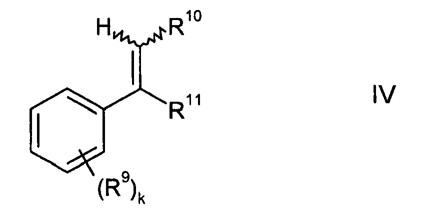 wobei die Variablen wie folgt definiert sind:
R¹, R² gleich oder verschieden und gewählt aus Wasserstoff und C₁-C₁₀-Alkyl,
R³, R⁴ gleich oder verschieden und gewählt aus Wasserstoff, C₁-C₂₀-Alkyl, Phenyl,
oder R³ und R⁴ sind gemeinsam C₂-C₁₀-Alkylen, substituiert oder unsub- stituiert,
R⁵ gewählt aus C₁-C₂₀-Alkyl, Phenyl,
R⁶, R⁷, R⁸, R⁹, R¹⁰, R¹¹ gleich oder verschieden und gewählt aus Wasserstoff und C₁-C₁₀-Alkyl,
x eine ganze Zahl im Bereich von 0 bis 12,
y gewählt aus 0 oder 1, wobei für den Fall, dass y gleich 1 ist, x ungleich 0 gewählt wird,
k eine ganze Zahl im Bereich von 0 bis 3,
wobei die Copolymerisate vollständig oder partiell mit Alkali oder Ammonium neutralisiert sein können und
wobei Angaben in Gew.-% jeweils auf das gesamte Copolymerisat bezogen sind.

2. Copolymerisate nach Anspruch 1, **dadurch gekennzeichnet, dass** es sich bei mindestens einer ethylenisch ungesättigten C₄-C₁₀-Dicarbonsäure (a) um Itaconsäure handelt.

3. Copolymerisate nach Anspruch 1 oder 2, **dadurch gekennzeichnet, dass** R¹ und R² jeweils Wasserstoff oder Methyl bedeuten.

4. Copolymerisate nach einem der Ansprüche 1 bis 3, **dadurch gekennzeichnet, dass** man sie nach einem Einstufenverfahren herstellt.

5. Wässrige Dispersionen, enthaltend mindestens ein Copolymerisat nach einem der Ansprüche 1 bis 4.

6. Wässrige Dispersionen nach Anspruch 6, **dadurch gekennzeichnet, dass** sie einen pH-Wert im Bereich von 2 bis 8,5 aufweisen.

7. Wässrige Dispersionen nach Anspruch 5 oder 6, **dadurch gekennzeichnet, dass** sie mindestens ein Vernetzungsmittel enthalten.

8. Wässrige Dispersionen nach Anspruch 7, **dadurch gekennzeichnet, dass** es sich bei mindestens einem Vernetzungsmittel um eine Zn- oder Ca- oder Mg-Verbindung handelt.

9. Verwendung von wässrigen Dispersionen nach einem der Ansprüche 7 oder 8 zur Beschichtung von flexiblen Substraten.

10. Verfahren zur Beschichtung von flexiblen Substraten unter Verwendung von mindestens einer wässrigen Dispersion nach einem der Ansprüche 7 oder 8.

11. Verfahren nach Anspruch 10, **dadurch gekennzeichnet, dass** es sich bei flexiblen Substraten um Leder oder Lederimitate handelt.

12. Beschichtete flexible Substrate, erhältlich nach einem Verfahren nach Anspruch 10 oder 11.

13. Verfahren zur Herstellung von Schuhen, Bekleidung, Möbeln oder Automobilteilen unter Verwendung von beschichteten flexiblen Substraten nach einem der Ansprüche 10 oder 11.

14. Möbel, erhältlich nach einem Verfahren nach Anspruch 13.

15. Automobilteile, erhältlich nach einem Verfahren nach Anspruch 13.

16. Verfahren zur Herstellung von Copolymerisaten, **dadurch gekennzeichnet, dass** man
(a) insgesamt 3,5 bis 20 Gew.-% mindestens einer polymerisierbaren Säure, gewählt aus
(a1) ethylenisch ungesättigten C₃-C₁₀-Monocarbonsäuren und
(a2) ethylenisch ungesättigten C₃-C₁₀-Dicarbonsäuren oder ihren Anhydriden,
(b) 4 bis 10 Gew.-% mindestens einer Verbindung der allgemeinen Formel I, 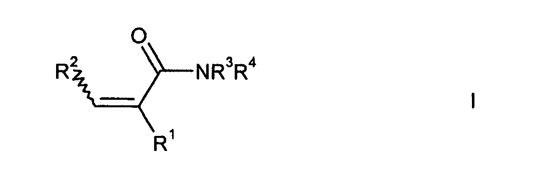 wobei die Summe aus (a) und (b) im Bereich von 7,5 bis 24 Gew.-% liegt,
(c) 60 bis 92,5 Gew.-% mindestens einer Verbindung der allgemeinen Formel II 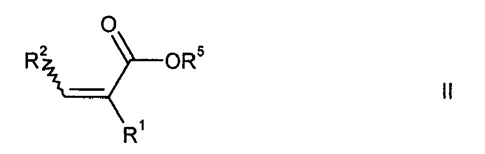
(d) 0 bis 0,5 Gew.-% mindestens einer Verbindung der allgemeinen Formel III 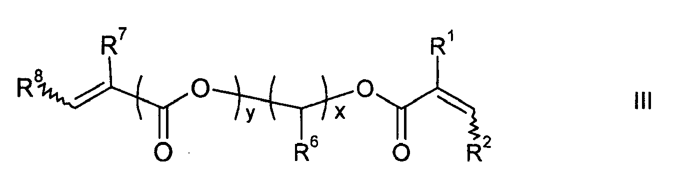
(e) 0 bis 10 Gew.-% (Meth)acrylnitril
(f) 0 bis 10 Gew.-% mindestens eines konjugierten Diolefins,
(g) 0 bis 10 Gew.-% mindestens einer vinylaromatischen Verbindung der allgemeinen Formel IV 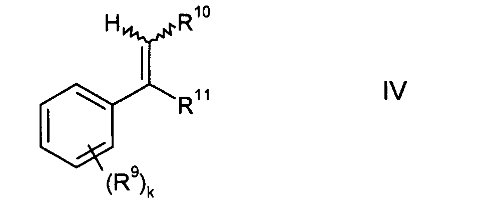 wobei die Variablen wie folgt definiert sind:
R¹, R² gleich oder verschieden und gewählt aus Wasserstoff und C₁-C₁₀Alkyl,
R³, R⁴ gleich oder verschieden und gewählt aus Wasserstoff, C₁-C₂₀-Alkyl, Phenyl, oder R³ und R⁴ sind gemeinsam C₂-C₁₀-Alkylen, substituiert oder unsubstituiert,
R⁵ gewählt aus C₁-C₂₀-Alkyl, Phenyl,
R⁶, R⁷, R⁸, R⁹, R¹⁰, R¹¹ gleich oder verschieden und gewählt aus Wasserstoff und C₁-C₁₀-Alkyl,
x eine ganze Zahl im Bereich von 0 bis 12,
y gewählt aus 0 oder 1, wobei für den Fall, dass y gleich 1 ist, x ungleich 0 gewählt wird,
k eine ganze Zahl im Bereich von 0 bis 3,
durch Emulsionspolymerisation miteinander copolymerisiert und gegebenenfalls mit basischer Alkalimetallverbindung, Ammoniak oder Amin vollständig oder partiell neutralisiert.

17. Verfahren nach Anspruch 16, **dadurch gekennzeichnet, dass** man die Copolymerisation bei Temperaturen im Bereich von 55 bis 100°C durchführt.

## Claims

1. A copolymer prepared by copolymerization of
(a) a total of from 3.5 to 20% by weight of at least one polymerizable acid selected from
(a1) ethylenically unsaturated C₃-C₁₀-monocarboxylic acid and
(a2) ethylenically unsaturated C₄-C₁₀-dicarboxylic acid or their anhydrides,
(b) from 4 to 10% by weight of at least one compound of the general formula I 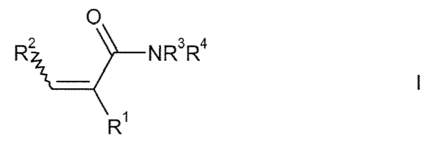 the sum of (a) and (b) being in the range from 7.5 to 24% by weight,
(c) from 60 to 92.5% by weight of at least one compound of the general formula II 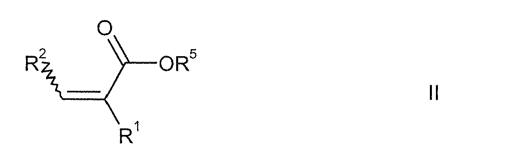
(d) from 0 to 0.5% by weight of at least one compound of the general formula III 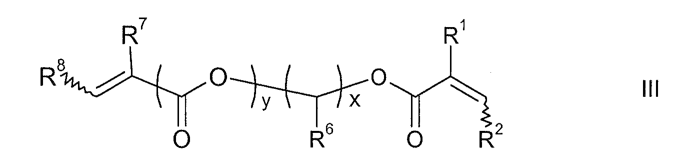
(e) from 0 to 10% by weight of (meth)acrylonitrile,
(f) from 0 to 10% by weight of at least one conjugated diolefin,
(g) from 0 to 10% by weight of at least one vinylaromatic compound of the general formula IV 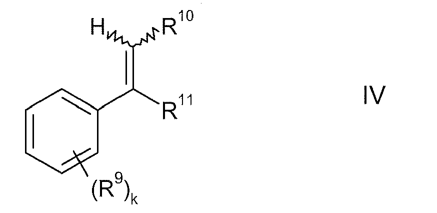 the variables being defined as follows:
R¹ and R² are identical or different and are selected from hydrogen and C₁-C₁₀-alkyl,
R³ and R⁴ are identical or different and are selected from hydrogen, C₁-C₂₀-alkyl and phenyl,
or R³ and R⁴ together are C₂-C₁₀-alkylene, substituted or unsubstituted,
R⁵ is selected from C₁-C₂₀-alkyl and phenyl,
R⁶, R⁷, R⁸, R⁹, R¹⁰ and R¹¹ are identical or different and are selected from hydrogen and C₁-C₁₀-alkyl,
x is an integer in the range from 0 to 12,
y is selected from 0 and 1, x being chosen to be not equal to 0 when y is 1,
k is an integer in the range from 0 to 3,
it being possible for the copolymers to be completely or partly neutralized with alkali or ammonium and
data in % by weight being based in each case on the total copolymer.

2. The copolymer according to claim 1, wherein at least one ethylenically unsaturated C₄-C₁₀-dicarboxylic acid (a) is itaconic acid.

3. The copolymer according to claim 1 or 2, wherein R¹ and R² are each hydrogen or methyl.

4. The copolymer according to any of claims 1 to 3, which is prepared by a one-stage process.

5. An aqueous dispersion comprising at least one copolymer according to any of claims 1 to 4.

6. The aqueous dispersion according to claim 6, which has a pH in the range from 2 to 8.5.

7. The aqueous dispersion according to claim 5 or 6, which comprises at least one crosslinking agent.

8. The aqueous dispersion according to claim 7, wherein at least one crosslinking agent is a zinc or calcium or magnesium compound.

9. The use of aqueous dispersions according to either of claims 7 and 8 for coating flexible substrates.

10. A process for coating flexible substrates using at least one aqueous dispersion according to either of claims 7 and 8.

11. The process according to claim 10, wherein flexible substrates are leather or imitation leathers.

12. A coated flexible substrate obtainable by a process according to claim 10 or 11.

13. A process for the production of shoes, apparel, pieces of furniture or automotive parts using coated flexible substrates according to either of claims 10 and 11.

14. A piece of furniture obtainable by a process according to claim 13.

15. An automotive part obtainable by a process according to claim 13.

16. A process for the preparation of copolymers, wherein
(a) a total of from 3.5 to 20% by weight of at least one polymerizable acid selected from
(a1) ethylenically unsaturated C₃-C₁₀-monocarboxylic acids and
(a2) ethylenically unsaturated C₃-C₁₀-dicarboxylic acids or their anhydrides,
(b) from 4 to 10% by weight of at least one compound of the general formula I 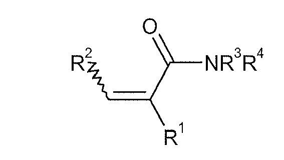 the sum of (a) and (b) being in the range from 7.5 to 24% by weight,
(c) from 60 to 92.5% by weight of at least one compound of the general formula II 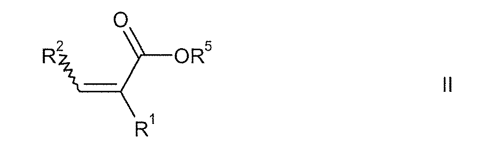
(d) from 0 to 0.5% by weight of at least one compound of the general formula III 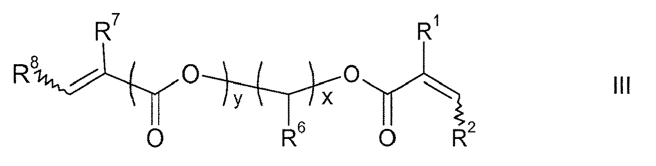
(e) from 0 to 10% by weight of (meth)acrylonitrile,
(f) from 0 to 10% by weight of at least one conjugated diolefin,
(g) from 0 to 10% by weight of at least one vinylaromatic compound of the general formula IV 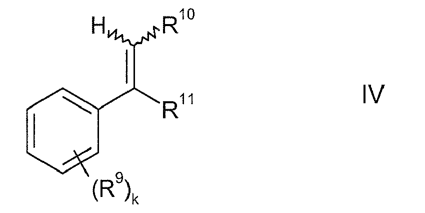 the variables being defined as follows:
R¹ and R² are identical or different and are selected from hydrogen and C₁-C₁₀-alkyl,
R³ and R⁴ are identical or different and are selected from hydrogen, C₁-C₂₀-alkyl and phenyl, or R³ and R⁴ together are C₂-C₁₀- alkylene, substituted or unsubstituted,
R⁵ is selected from C₁-C₂₀-alkyl and phenyl,
R⁶, R⁷, R⁸, R⁹, R¹⁰ and R¹¹ are identical or different and are selected from hydrogen and C₁-C₁₀-alkyl,
x is an integer in the range from 0 to 12,
y is selected from 0 and 1, x being chosen to be not equal to 0 when y is 1,
k is an integer in the range from 0 to 3,
are copolymerized with one another by emulsion polymerization and, if appropriate, completely or partly neutralized with a basic alkali metal compound, ammonia or an amine.

17. The process according to claim 16, wherein the copolymerization is carried out at temperatures in the range from 55 to 100°C.

## Revendications

1. Copolymères, préparés par copolymérisation de
(a) au total 3,5 à 20% en poids d'au moins un acide polymérisable, choisi parmi
(a1) les acides C₃-C₁₀-monocarboxyliques éthyléniquement insaturés et
(a2) les acides C₄-C₁₀-dicarboxyliques éthyléniquement insaturés ou leurs anhydrides,
(b) 4 à 10% en poids d'au moins un composé de formule générale I, 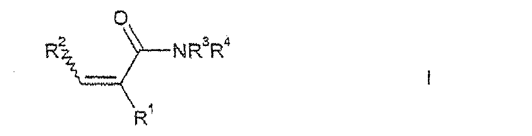 la somme de (a) et (b) se situant dans la plage de 7,5 à 24% en poids,
(c) 60 à 92,5% en poids d'au moins un composé de formule générale II 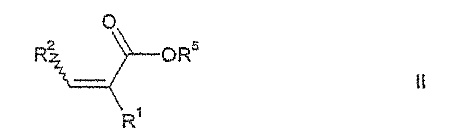
(d) 0 à 0,5% en poids d'au moins un composé de formule générale III 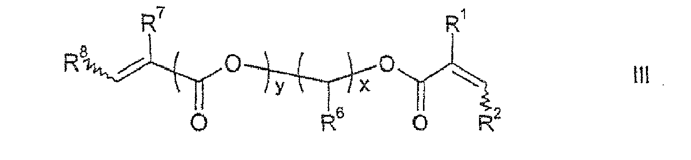
(e) 0 à 10% en poids de (méth)acrylonitrile,
(f) 0 à 10% en poids d'au moins une dioléfine conjuguée,
(g) 0 à 10% en poids d'au moins un composé aromatique de vinyle de formule générale IV 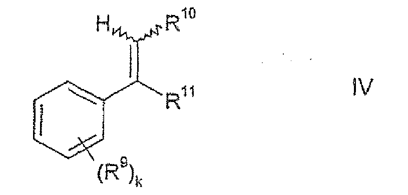 les variables étant définies comme suit :
R¹, R² sont identiques ou différents et choisis parmi hydrogène et C₁-C₁₀-alkyle,
R³, R⁴ sont identiques ou différents et choisis parmi hydrogène, C₁-C₂₀-alkyle, phényle,
ou
R³ et R⁴ représentent ensemble C₂-C₁₀-alkylène, substitué ou non substitué,
R⁵ est choisi parmi C₁-C₂₀-alkyle, phényle,
R⁶, R⁷, R⁸, R⁹, R¹⁰, R¹¹ sont identiques ou différents et choisis parmi hydrogène et C₁-C₁₀-alkyle,
x représente un nombre entier de la plage de 0 à 12,
y est choisi parmi 0 ou 1, où, pour le cas où y représenterait 1, x est choisi différent de 0,
k représente un nombre entier de la plage de 0 à 3,
où les copolymères peuvent être neutralisés totalement ou partiellement avec un métal alcalin ou de l'ammonium et
où les indications en % en poids se rapportent à chaque fois au copolymère total.

2. Copolymères selon la revendication 1, **caractérisés en ce qu'**il s'agit pour au moins un acide C₄-C₁₀-dicarboxylique éthyléniquement insaturé (a) de l'acide itaconique.

3. Copolymères selon la revendication 1 ou 2, **caractérisés en ce que** R¹ et R² signifient à chaque fois hydrogène ou méthyle.

4. Copolymères selon l'une quelconque des revendications 1 à 3, **caractérisés en ce qu'**on les prépare selon un procédé dans un pot.

5. Dispersions aqueuses, contenant au moins un copolymère selon l'une quelconque des revendications 1 à 4.

6. Dispersions aqueuses selon la revendication 6, **caractérisées en ce qu'**elles présentent un pH dans la plage de 2 à 8,5.

7. Dispersions aqueuses selon la revendication 5 ou 6, **caractérisées en ce qu'**elles contiennent au moins un réticulant.

8. Dispersions aqueuses selon la revendication 7, **caractérisées en ce qu'**il s'agit, pour au moins un réticulant, d'un composé de Zn ou de Ca ou de Mg.

9. Utilisation de dispersions aqueuses selon au moins l'une quelconque des revendications 7 ou 8 pour le revêtement de substrats souples.

10. Procédé pour le revêtement de substrats souples en utilisant au moins une dispersion aqueuse selon l'une quelconque des revendications 7 ou 8.

11. Procédé selon la revendication 10, **caractérisé en ce qu'**il s'agit, pour les substrats souples, de cuir ou d'imitations du cuir.

12. Substrats souples revêtus, pouvant être obtenus selon un procédé selon la revendication 10 ou 11.

13. Procédé pour la fabrication de chaussures, de vêtements, de meubles ou de pièces pour automobiles en utilisant des substrats souples revêtus selon l'une quelconque des revendications 10 ou 11.

14. Meubles, pouvant être obtenus selon un procédé selon la revendication 13.

15. Pièces pour automobiles, pouvant être obtenues selon un procédé selon la revendication 13.

16. Procédé pour la préparation de copolymères, **caractérisé en ce qu'**on copolymérise l'un avec l'autre
(a) au total 3,5 à 20% en poids d'au moins un acide polymérisable, choisi parmi
(a1) les acides C₃-C₁₀-monocarboxyliques éthyléniquement insaturés et
(a2) les acides C₃-C₂₀-dicarboxyliques éthyléniquement insaturés ou leurs anhydrides,
(b) 4 à 10% en poids d'au moins un composé de formule générale I, 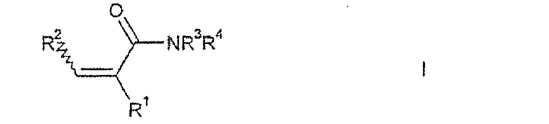 la somme de (a) et (b) se situant dans la plage de 7,5 à 24% en poids,
(c) 60 à 92,5% en poids d'au moins un composé de formule générale II 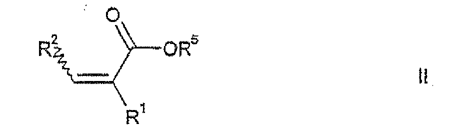
(d) 0 à 0,5% en poids d'au moins un composé de formule générale III 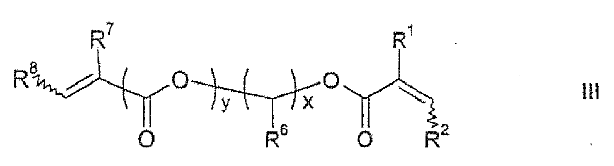
(e) 0 à 10% en poids de (méth)acrylonitrile,
(f) 0 à 10% en poids d'au moins une dioléfine conjuguée,
(g) 0 à 10% en poids d'au moins un composé aromatique de vinyle de formule générale IV 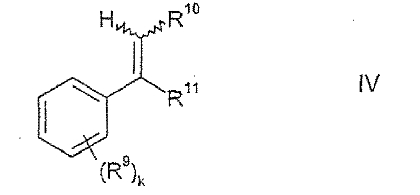 les variables étant définies comme suit :
R¹, R² sont identiques ou différents et choisis parmi hydrogène et C₁-C₁₀-alkyle,
R³, R⁴ identiques ou différents et choisis parmi hydrogène, C₁-C₂₀-alkyle, phényle, ou R³ et R⁴ représentent ensemble C₂-C₁₀-alkylène, substitué ou non substitué,
R⁵ est choisi parmi C₁-C₂₀-alkyle, phényle,
R⁶, R⁷, R⁸, R⁹, R¹⁰, R¹¹ sont identiques ou différents et choisis parmi hydrogène et C₁-C₁₀-alkyle,
x représente un nombre entier de la plage de 0 à 12,
y est choisi parmi 0 ou 1, où, pour le cas où y représenterait 1, x est choisi différent de 0,
k représente un nombre entier de la plage de 0 à 3,
par une polymérisation en émulsion et on neutralise le cas échéant totalement ou partiellement avec un composé basique de métal alcalin, de l'ammoniac ou une amine.

17. Procédé selon la revendication 16, **caractérisé en ce qu'**on réalise la copolymérisation à des températures dans la plage de 55 à 100°C.
